(19) Europäisches Patentamt / European Patent Office / Office européen des brevets

(11) **EP 4 195 556 A1**

(12) **EUROPEAN PATENT APPLICATION**
published in accordance with Art. 153(4) EPC

(43) Date of publication:
**14.06.2023 Bulletin 2023/24**

(21) Application number: **20948466.6**

(22) Date of filing: **06.08.2020**

(51) International Patent Classification (IPC):
**H04L 5/00** (2006.01)

(52) Cooperative Patent Classification (CPC):
**H04L 5/00**

(86) International application number:
**PCT/CN2020/107563**

(87) International publication number:
**WO 2022/027509 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventors:
• **CHEN, Zhe**
**Beijing 100027 (CN)**
• **ZHANG, Lei**
**Beijing 100027 (CN)**
• **ZHANG, Jian**
**Beijing 100027 (CN)**
• **JIANG, Qinyan**
**Beijing 100027 (CN)**

(74) Representative: **Haseltine Lake Kempner LLP**
**Cheapside House**
**138 Cheapside**
**London EC2V 6BJ (GB)**

(54) **METHOD AND APPARATUS FOR SENDING UPLINK DATA, AND SYSTEM**

(57)    Embodiments of this disclosure provide a method and apparatus for transmitting uplink data and a communication system. The method includes: a terminal equipment transmits uplink data in a manner of PUSCH repetition type B, at least one transmission occasion of the uplink data being related to at least two TRPs. According to the embodiments of this disclosure, the uplink data is transmitted in a manner of spatial diversity. That is, at the terminal side, the same data may reach a network side via different spatial domain paths or via different TRPs (transmission and reception points). Hence, in a case where blockage occurs in one path, other paths may still continue to operate, thereby ensuring low latency and high reliability of the uplink data.

502
the terminal equipment receives indication information, the indication information indicating that at least one transmission occasion of the uplink data is related to at least two TRPs

501
a terminal equipment transmits uplink data in a manner of PUSCH repetition type B, at least one transmission occasion of the uplink data being related to two TRPs

**FIG. 5**

EP 4 195 556 A1

## Description

Field

This disclosure relates to the field of communications.

Background

In order to meet requirements of URLLC (ultra reliable low latency communications) services on high reliability and low latency at the same time, NR Rel-16 (New radio Release 16) introduces a corresponding uplink data transmission mechanism, which supports more flexible uplink data transmission to ensure transmitting uplink data in a low latency manner.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

It was found by the inventors that NR (New Radio) supports a carrier frequency up to 52.6GHz. When the carrier frequency is relatively high, a high-frequency signal is easily blocked by obstacles due to its poor diffraction ability. When a transmission path is blocked, corresponding transmission channel quality is seriously degraded, thereby resulting in reduction of reliability of a transmission signal and/or increase of transmission delay. This is very unfavorable for URLLC services. In particular, when the signal blockage is serious to some extent, the URLLC services in progress may be forced to interrupt or fail. This is because by using an existing uplink scheduling mechanism, it takes tens of milliseconds for a terminal equipment to recover a communication link at the fastest speed, while the communication delay requirements of URLLC is generally far less than tens of milliseconds. After a link failure, URLLC service packets in transmission fail because of time expiration before they can wait for the communication link to respond.

In order to reduce the impact of the instability of the high-frequency transmission channel on the uplink data transmission, embodiments of this disclosure provide a method and apparatus for transmitting uplink data and a communication system, so that uplink data may be transmitted in a manner of spatial diversity (that is, transmitted to different TRPs), thereby enhancing reliability of uplink data transmission, and efficiently lowering impact of instability of channels on transmission latency.

According to an aspect of the embodiments of this disclosure, there is provided a method for transmitting uplink data, the method including:
a terminal equipment transmits uplink data in a manner of PUSCH repetition type B, at least one transmission occasion of the uplink data being related to at least two TRPs.

According to another aspect of the embodiments of this disclosure, there is provided a method for transmitting uplink data, the method including:
a terminal equipment transmits uplink data in a manner of PUSCH repetition type A, at least one transmission occasion of the uplink data being related to at least two TRPs.

According to a further aspect of the embodiments of this disclosure, there is provided a method for indicating uplink data transmission, the method including:
a network device transmits indication information to a terminal equipment, the indication information indicating that at least one transmission occasion of the uplink data is related to at least two TRPs.

According to still another aspect of the embodiments of this disclosure, there is provided an apparatus for transmitting uplink data, the apparatus including:
a transmitting unit configured to transmit uplink data in a manner of PUSCH repetition type B, at least one transmission occasion of the uplink data being related to at least two TRPs.

According to yet another aspect of the embodiments of this disclosure, there is provided an apparatus for transmitting uplink data, the apparatus including:
a transmitting unit configured to transmit uplink data in a manner of PUSCH repetition type A, at least one transmission occasion of the uplink data being related to at least two TRPs.

According to yet still another aspect of the embodiments of this disclosure, there is provided an apparatus for indicating uplink data transmission, the apparatus including:
a transmitting unit configured to transmit indication information to a terminal equipment, the indication information indicating that at least one transmission occasion of the uplink data is related to at least two TRPs.

An advantage of the embodiments of this disclosure exists in that according to the embodiments of this disclosure, the uplink data is transmitted in a manner of spatial diversity. That is, at the terminal side, the same data may reach a network side via different spatial domain paths or via different TRPs (transmission and reception points). Hence, in a case where blockage occurs in one path, other paths may still continue to operate, thereby ensuring high reliability of the uplink data. And furthermore, as the method may use spatial diversity gains, the number of times of triggering a beam recovery mechanism may be eliminated or reduced, thereby lowering transmission latency of the uplink data.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the disclosure may be combined with elements and features depicted in one or more additional drawings or embodiments. Moreover, in the drawings, like reference numerals designate corresponding parts within the several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:

FIG. 1 is schematic diagram of an example of a dynamically scheduled PUSCH;
FIG. 2 is a schematic diagram of an example of a configured grant PUSCH;
FIG. 3 is a schematic diagram of an example of a dynamically scheduled PUSCH;
FIG. 4 is a schematic diagram of an example of a configured grant PUSCH;
FIG. 5 is a schematic diagram of the method for transmitting uplink data of an embodiment of this disclosure;
FIG. 6 is a schematic diagram of an example of a mapping relation between transmission occasions of a dynamically scheduled PUSCH and TRPs;
FIG. 7 is a schematic diagram of an example of a mapping relation between transmission occasions of a configured grant PUSCH and TRPs;
FIG. 8 is a schematic diagram of another example of the mapping relation between transmission occasions of a dynamically scheduled PUSCH and TRPs;
FIG. 9 is a schematic diagram of another example of the mapping relation between transmission occasions of a configured grant PUSCH and TRPs;
FIG. 10 is a schematic diagram of the method for transmitting uplink data of an embodiment of this disclosure;
FIG. 11 is a schematic diagram of an example of a mapping relation between transmission occasions of a dynamically scheduled PUSCH and TRPs;
FIG. 12 is a schematic diagram of an example of a mapping relation between transmission occasions of a configured grant PUSCH and TRPs;
FIG. 13 is a schematic diagram of the method for indicating uplink data transmission of an embodiment of this disclosure;
FIG. 14 is a schematic diagram of the apparatus for transmitting uplink data of an embodiment of this disclosure;
FIG. 15 is a schematic diagram of the apparatus for transmitting uplink data of an embodiment of this disclosure;
FIG. 16 is a schematic diagram of the apparatus for indicating uplink data transmission of an embodiment of this disclosure;
FIG. 17 is a schematic diagram of the communication system of an embodiment of this disclosure;
FIG. 18 is a schematic diagram of the terminal equipment of an embodiment of this disclosure; and
FIG. 19 is a schematic diagram of the network device of an embodiment of this disclosure.

Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of' or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following equipment: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, an machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In order to make the embodiments of this disclosure clear and understandable, some concepts and definitions involved in the embodiments of this disclosure are explained below.

The PUSCH repetition Type A is described below.

In the embodiments of this disclosure, PUSCH repetition Type A is a slot-based uplink data transmission manner. A PUSCH (physical uplink shared channel) transmitted in PUSCH repetition Type A corresponds to one or more repetitions or transmission occasions, which are marked as repetition#1, repetition#2, ..., repetition#m; where, m=1,2,3..., K, K is the number of repetitions of the PUSCH. If K>1, there exists a repetition for each slot in K consecutive slots, and these repetitions have identical time domain/symbol allocation modes. In addition, these repetitions correspond to identical TBs (transmission blocks). Specifically, the PUSCH may be indicated by the following parameters:

a starting slot of the PUSCH (marked as Ks);
a time domain starting symbol of the PUSCH (marked as S);
a time domain length of each repetition (marked as L), this length being in units of symbol; and
the number of repetitions (K); for example, the above number of repetitions is 1,2,4,7,16, and the number of repetitions may also be 2,4,8; however, this disclosure is not limited thereto, and the number of repetitions may also be other positive integers.

It should be noted that the above S and L may be indicated separately, or may be indicated jointly by a start and length indicator (SLIV).

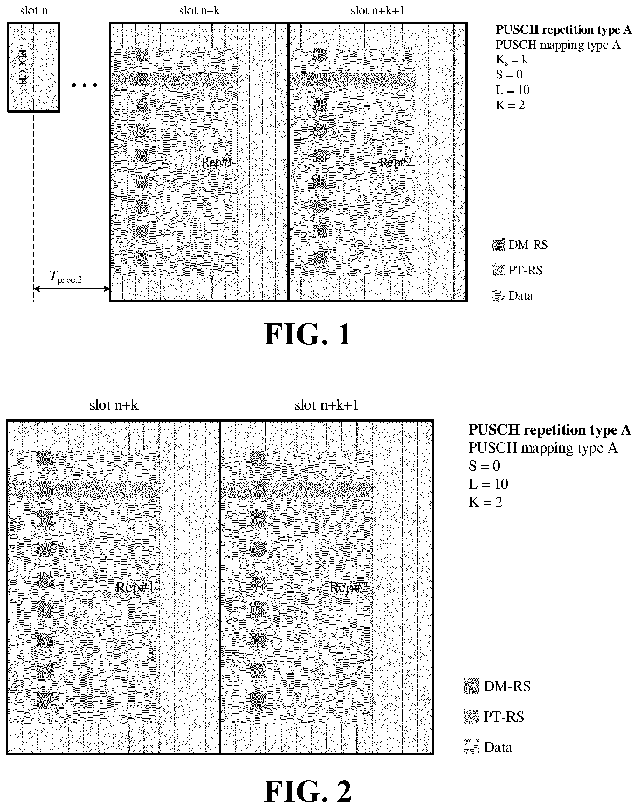

FIG. 1 is a schematic diagram of an example of a dynamically scheduled PUSCH. As shown in FIG. 1, when a UE receives a PUSCH transmission indication (such as a PDCCH), it transmits a corresponding PUSCH, wherein, specific parameters are:

Ks = k; for example, k may be 0,1,2...
S = 0;
L = 10;
K = 2.

In the example in FIG. 1, a time-domain resource mapping type of the PUSCH (PUSCH mapping type) is PUSCH mapping type A, in which, a DM-RS (demodulation reference signal) starts from a third symbol of each slot, and a corresponding phase-tracking reference signal (PT-RS) is configured. As K=2, a first repetition or a first transmission occasion of the PUSCH is in slot n+k, and a second repetition or a second transmission occasion of the PUSCH is in slot n+k+1.

FIG. 2 is a schematic diagram of an example of a configured grant PUSCH. As shown in FIG. 2, a UE determines that a PUSCH may be transmitted in slot n+k (that is, there is a PUSCH transmission occasion starting from slot n+k) according to CG configuration corresponding to the PUSCH and/or an indication of activation DCI related to the PUSCH. Corresponding other parameters are:

S = 0;
L = 10;
K = 2;

In the example in FIG. 2, a PUSCH time-domain resource mapping type of the PUSCH (PUSCH mapping type) is PUSCH mapping type A, in which, a DM-RS starts from a third symbol of each slot, and a corresponding PT-RS is configured. As K=2, a first repetition or a first transmission occasion of the PUSCH is in slot n+k, and a second repetition or a second transmission occasion of the PUSCH is in slot n+k+1.

The PUSCH repetition Type B is explained below.

In the embodiments of this disclosure, the PUSCH repetition Type B is an uplink data transmission manner with low-latency. A PUSCH transmitted in a PUSCH repetition type B manner corresponds to one or more nominal repetitions or corresponds to transmission occasions of one or more nominal repetitions, which are marked as nominal repetition#1, nominal repetition#2,..., nominal repetition#n; where, n=1,2,3..., N, and N is the number of nominal repetitions of the PUSCH. Specifically, the PUSCH may be indicated by the following parameters:

a starting slot of the PUSCH (marked as Ks);
a time domain starting symbol of the PUSCH (marked as S);

a time domain starting point, a time domain ending point and a time domain length for PUSCH nominal repetition#n, a slot corresponding to the time domain starting point being

$$K_S + \left\lfloor \frac{S+nL}{N_{symb}^{slot}} \right\rfloor$$

, a symbol corresponding to the time domain starting point being

$$\mathrm{mod}(S + nL, N_{symb}^{slot})$$

, a slot corresponding to the time domain ending point being $K_S + $

$$\left\lfloor \frac{S+(n+1)L-1}{N_{symb}^{slot}} \right\rfloor$$

, a symbol corresponding to the time domain ending point being $\mathrm{mod}S +$

$$(n + 1)L\text{-}1, N_{symb}^{slot})$$

, and the time domain length (L) being in units of symbols; in the above formulae,

$$N_{symb}^{slot}$$

refers to a symbol corresponding to a slot; and

the number (N) of nominal repetitions; for example, the above number of repetitions is 1,2,4,7,12,16; however, this disclosure is not limited thereto, and the number of repetitions may also be other positive integers.

After the UE determines time domain resources corresponding to the nominal repetitions according to the above parameters, it needs to further determine corresponding actual repetitions according to a slot boundary and invalid symbol (s). A method for determination is: in a slot, if the number of potentially valid symbols to which a nominal repetition corresponds that exclude invalid symbols is greater than zero, the nominal repetitions consist of one or more actual repetitions, wherein each actual repetition consists of all the continuous potential valid symbols.

It should be noted that invalid symbols include symbols indicated as downlink by higher layer signaling. Here, the higher layer signaling may be a cell-dedicated uplink/downlink TDD (time division duplexing) configuration, such as *tdd-UL-DL-ConfigurationCommon*, and the higher layer signaling may also be a UE-dedicated uplink/downlink TDD configuration, such as *tdd-UL-DL-ConfigurationDedicated*.

Alternatively, the invalid symbol may also include a symbol corresponding to an invalid symbol pattern indicated by higher layer signaling. For a type 2 configured grant or dynamic scheduled, whether the invalid symbol pattern is effective may be determined according to an *invalid symbol pattern indicator field* of DCI. For example, when this field is set to be 1, a corresponding invalid symbol pattern is deemed as being valid; and when this field is set to be 0, a corresponding invalid symbol pattern is deemed as being invalid.

In addition, when L is not equal to 1 and a length of an actual repetition is of 1 symbol, the actual repetition will be omitted or will not be transmitted. When an actual repetition conflicts with a slot format, for example, when a flexible symbol is interpreted/indicated as a DL symbol according to an indication of the DCI, the actual repetition will be omitted or will not be transmitted.

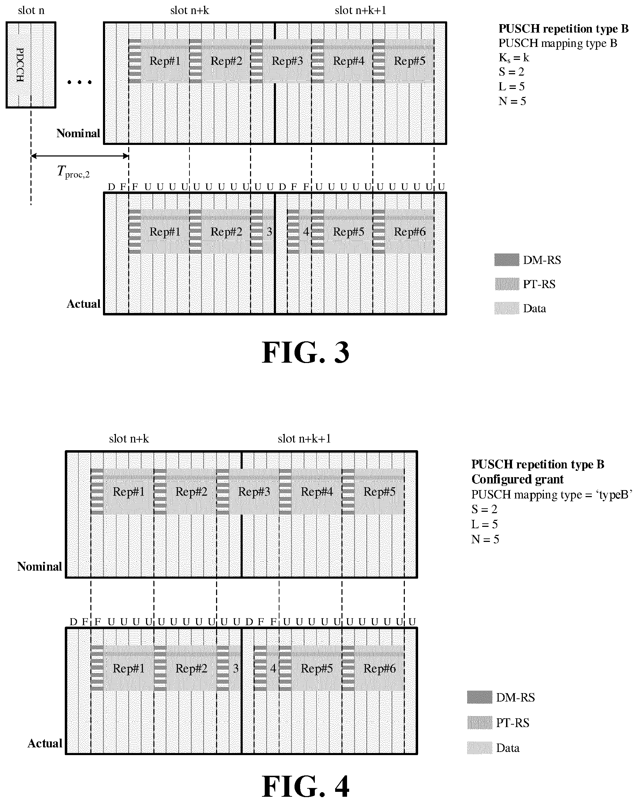

FIG. 3 is a schematic diagram of an example of a dynamically scheduled PUSCH. As shown in FIG. 3, after the UE receives a PUSCH transmission indication (such as a PDCCH), it transmits a corresponding PUSCH after at least $T_{proc,2}$; where, $T_{proc,2}$ refers to a UE PUSCH preparation procedure time; in addition, other parameters are:

Ks = k; for example, k may be 0,1,2...
S = 2;
L = 5;

N = 5.

In this example, a slot format of each symbol is configured by the higher layer signaling; and as shown in FIG. 3, D denotes a downlink symbol, U denotes an uplink symbol, and F denotes a flexible symbol. In addition, a PUSCH time domain resource mapping type (PUSCH mapping type) is PUSCH mapping type B, in which, the DM-RS starts from a first symbol of each actual repetition, and a PT-RS is configured.

In this example, the above PUSCH corresponds to 5 normal repetitions and 6 actual repetitions respectively; or, in other words, the above PUSCH corresponds to transmission occasions of 5 nominal repetitions, or the above PUSCH corresponds to transmission occasions of 6 actual repetitions. This is because nominal repetition#3 crosses the slot boundary, and a first symbol of slot n+k+1 is configured as a DL symbol, i.e. an invalid symbol, and according to the above rules, this symbol is not included in the actual repetitions. Therefore, the nominal repetition#3 is divided into two parts (actual repetition#3 and actual repetition#4), which occupy two consecutive symbols respectively.

FIG. 4 is a schematic diagram of an example of a configured grant PUSCH. As shown in FIG. 4, the UE determines that a PUSCH may be transmitted starting from slot n+k (that is, there is a PUSCH transmission occasion starting from slot n+k) according to CG configuration corresponding to the PUSCH and/or an indication of activation DCI related to the PUSCH. Corresponding other parameters are:

S = 2;
L = 5;
N = 5.

In this example, a slot format of each symbol is configured by the higher layer signaling; and as shown in FIG. 4, D denotes a downlink symbol, U denotes an uplink symbol, and F denotes a flexible symbol. In addition, a DM-RS starts from a first symbol of each actual repetition and a PT-RS is configured.

In this example, the above PUSCH transmission corresponds to 5 normal repetitions and 6 actual repetitions respectively; or, in other words, the above PUSCH corresponds to transmission occasions of 5 nominal repetitions, or the above PUSCH corresponds to transmission occasions of 6 actual repetitions. This is because nominal repetition#3 crosses the slot boundary, and a first symbol of slot n+k+1 is configured as a DL symbol, i.e. an invalid symbol, and according to the above rules, this symbol is not included in the actual repetitions. Therefore, the nominal repetition#3 is divided into two parts (actual repetition#3 and actual repetition#4), which occupy two consecutive symbols respectively.

This disclosure provides multiple TRP transmission schemes for two different methods for transmitting uplink data (PUSCH repetition Type A and PUSCH repetition Type B).

Various embodiments of this disclosure are described below with reference to the accompanying drawings. These embodiments are illustrative only and are not intended to limit this disclosure.

Embodiment of a first aspect

The embodiment of this disclosure provides a method for transmitting uplink data, which shall be described from a terminal equipment side. The method of the embodiment of this disclosure is applicable to uplink data (PUSCHs) transmitted in a manner of PUSCH repetition type B, and shall be described by taking the scenario of the dynamically scheduled PUSCH shown in FIG. 3 and the scenario of the configured grant PUSCH shown in FIG. 4 as examples.

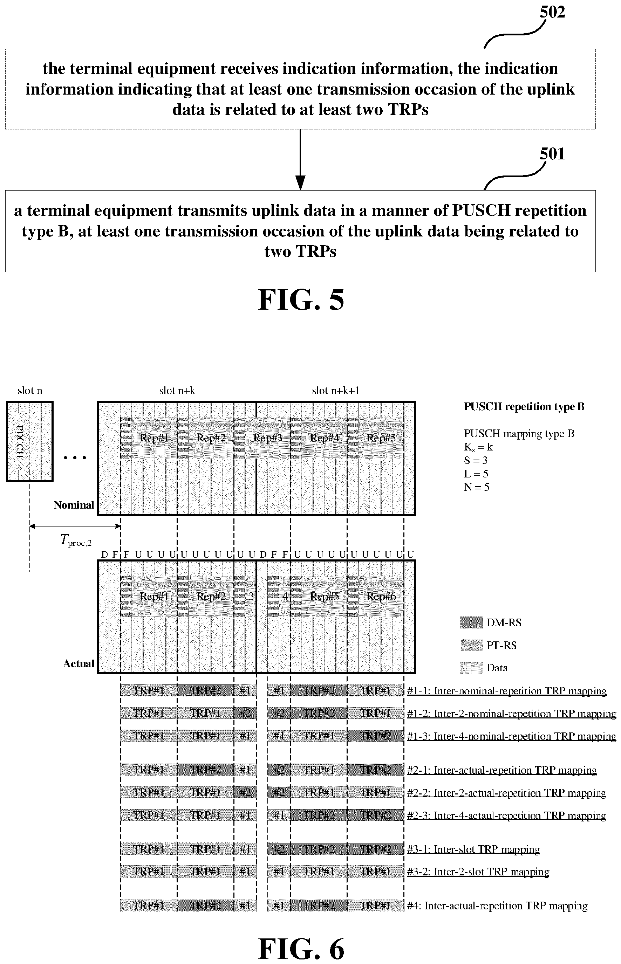

FIG. 5 is a schematic diagram of the method for transmitting uplink data of the embodiment of this disclosure. Referring to FIG. 5, the method includes:

501: a terminal equipment transmits uplink data in a manner of PUSCH repetition type B, at least one transmission occasion of the uplink data being related to two TRPs.

In some embodiments, the above transmission occasion is equivalent to a time-frequency resource, and is also equivalent to a repetition.

In the embodiments of this disclosure, the transmission occasion is equivalent to an actual repetition, and is also equivalent to a transmission occasion of an actual repetition; in addition, a transmission occasion of a nominal repetition is equivalent to a nominal repetition, and is also equivalent to a transmission occasion of an actual repetition corresponding to a nominal repetition.

According to the above method of the embodiment of this disclosure, the uplink data transmitted in the manner of PUSCH repetition type B may be transmitted in a short time in a spatial diversity manner (that is, transmitted to different TRPs) by taking advantages of characteristics of low latency, thereby enhancing reliability of uplink data transmission on the premise of ensuring low latency.

In some embodiments, the at least one transmission occasion of the uplink data being related to at least two TRPs refers to that the uplink data are respectively mapped (related) with the TRPs in units of transmission occasions of N1 nominal repetitions. For example, transmission occasions of former N1 nominal repetitions of the uplink data are related to a first TRP in the at least two TRPs, and transmission occasions of next N1 nominal repetitions of the uplink data are related to a second TRP in the at least two TRPs. And for remaining transmission occasions of the uplink data, a TRP association method identical to the above is also applied (or identical TRP mapping pattern is applied), that is, the remaining transmission occasions of the uplink data are still related (mapped) respectively to the first TRP and the second TRP in units of transmission occasions of N1 nominal repetitions.

According to the above embodiment, the correlation (mapping) relation between the transmission occasions of the PUSCH and the more than one corresponding TRPs is determined by using the nominal repetition (or the transmission occasion corresponding to the nominal repetition), it may effectively ensure that the lower limit of the spatial diversity gain will not be too low. That is, even if blockage occurs suddenly, for example, a link corresponding to an originally optimal TRP is blocked by an obstacle, and a non-optimal TPR transmission has to be relied on, transmission reliability of the PUSCH will not be too low. This feature is very important to URLLC services, because URLLC services have very strict requirements on data transmission latency and reliability. A main reason that the lower limit of the above spatial diversity gain will not be too low is that time domain lengths corresponding to each nominal repetition of the PUSCH are identical. Therefore, determining the mapping relation of the TRPs according to the nominal repetitions may enable the PUSCH to transmit data information to different TRPs alternately and uniformly in the time domain. In this way, total energies allocated by the PUSCH to each TRP are similar. That is, in case of blockage (the link corresponding to the originally optimal TRP is blocked by an obstacle), the PUSCH may still provide sufficient energies in a direction of a suboptimal a TRP or a TRP that is not blocked by an obstacle, so as to increase a success rate of detection of a receiver end and improve reliability of the system.

In the above embodiments, N1 may be 1,2,4 or 8. A magnitude of N1 usually needs to be adjusted according to qualities of channels between the terminal equipment and different TRPs and a probability of occurrence of blockage. In general, the qualities of channels between the terminal equipment and different TRPs are not always identical. The network device usually indicates the terminal equipment to transmit uplink data to a TRP of best channel quality in the time domain. When N1 is relatively large and the probability of blockage is relatively small, the terminal equipment is able to transmit uplink data via the optimal TRP earlier, thereby improving performances of the system. When N1 is relatively small, the probability of blockage is relatively high (blockage more likely occurs in the optimal TRP), thus the terminal equipment is able to quickly switch to a path corresponding to another (unblocked) TRP to transmit uplink data, thereby reducing latency.

In some embodiments, the at least one transmission occasion of the uplink data being related to at least two TRPs refers to that the uplink data are respectively mapped (related) with the TRPs in units of transmission occasions of N2 actual repetitions. For example, transmission occasions of former N2 actual repetitions of the uplink data are related to a first TRP in the at least two TRPs, and transmission occasions of next N2 actual repetitions of the uplink data are related to a second TRP in the at least two TRPs. And for remaining transmission occasions of the uplink data, a TRP association method identical to the above is also applied (or identical TRP mapping pattern is applied), that is, the remaining transmission occasions of the uplink data are still related (mapped) respectively to the first TRP and the second TRP in units of transmission occasions of N2 actual repetitions.

According to the above embodiment, the correlation (mapping) relation between the transmission occasions of the PUSCH and the more than one corresponding TRPs is determined by using the actual repetition (or the transmission occasion corresponding to the actual repetition), transmission latency of the uplink data may be lowered. This is because that time domain lengths corresponding to each actual repetition of the PUSCH are less than those of the nominal repetition. Therefore, in comparison, interleaving mapping with the TRPs according to the actual repetitions may enable a transmission path of the PUSCH to switch relatively quickly between different TRPs. In this way, when one TRP is blocked, transmission may be performed via another (unblocked) TRP, thereby lowering latency of the PUSCH.

In the above embodiments, N2 may be 1,2,4 or 8, and an effect thereof is identical to that of N1, which shall not be described herein any further.

In some embodiments, the at least one transmission occasion of the uplink data being related to at least two TRPs refers to that the uplink data are respectively mapped (related) with the TRPs in units of transmission occasions in N3 slots. For example, transmission occasions in former N3 slots of the uplink data are related to a first TRP in the at least two TRPs, and transmission occasions in next N3 slots of the uplink data are related to a second TRP in the at least two TRPs. And for remaining transmission occasions of the uplink data, a TRP association method identical to the above is also applied (or identical TRP mapping pattern is applied), that is, the remaining transmission occasions of the uplink data are still related (mapped) respectively to the first TRP and the second TRP in units of transmission occasions in N3 slots.

According to the above embodiment, the transmission direction of the PUSCH switches between multiple TRPs in units of slots, which reduces a total number of switching between the TRPs in comparison with a shorter time unit. This feature is conducive to lowering production costs of the terminal equipment. That is, this feature is conducive to reducing the requirements of URLLC services on capabilities of the terminal equipment, so that terminal equipments with low capabilities may also complete data transmission of URLLC services. And furthermore, this feature is also conducive to reducing energy consumption of the terminal equipment. That is, in a scenario of high reliability requirements and relatively loose latency requirements, the terminal equipment may reduce the number of switching between the TRPs, thereby achieving an effect of power saving.

In the above embodiments, N3 may be 1,2,4 or 8, and an effect thereof is identical to that of N1, which shall not be described herein any further.

In some embodiments, the at least one transmission occasion of uplink data being related to at least two TRPs refers to that in a slot, transmission occasions of the uplink data are cyclically mapped (related) respectively with the TRPs. If there are two TRPs, the transmission occasions of the uplink data are alternately mapped (related) with the two TRPs in a slot. For example, a first transmission occasion in the slot is related with the first TRP, a second transmission occasion in the slot is related with the second TRP, a third transmission occasion (if any) in the slot is related with the first TRP, a fourth transmission occasion (if any) in the slot is related to the second TRP, and so on.

According to the above embodiment, different transmission occasions of the PUSCH in a slot switch between multiple TRPs. This feature is conducive to reducing production cost of the terminal equipment. The reason is that an early communication device of NR usually processes data in units of slots. With the method of this embodiment, the cyclic mapping of the TRPs is independent for each slot. In this way, an original data processing algorithm based on slot processing may continue to be used, thereby reducing cost of research and development of terminal equipment.

In the embodiments of this disclosure, in some embodiments, the above uplink data (PUSCHs) have corresponding PDCCHs, that is, the above uplink data (PUSCHs) are dynamically scheduled PUSCHs.

FIG. 6 is a schematic diagram of an example of a mapping relation between transmission occasions of a dynamically scheduled PUSCH and TRPs. The scenario in FIG. 6 corresponds to that in FIG. 3, and the transmission occasions of the PUSCH being related to two TRPs is taken as an example.

As shown in FIG. 6, #1-1 is inter-nominal-repetition TRP mapping, that is, N1=1. In two slots (slot n+k and slot n+k+1) of the PUSCH, nominal repetitions Rep#1, Rep#3 and Rep#5 are related to TRP#1, nominal repetitions Rep#2 and Rep#4 are related to TRP#2. That is, actual repetitions (actual repetitions Rep#1, Rep#3, Rep#4, Rep#6) corresponding to nominal repetitions Rep#1, Rep#3 and Rep#5 are related to TRP#1, and actual repetitions (actual repetitions Rep#2 and Rep#5) corresponding to nominal repetitions Rep#2 and Rep#4 are related to TRP#2. Or, in other words, the transmission occasions of nominal repetitions Rep#1, Rep#3 and Rep#5 (corresponding to actual repetitions Rep#1, Rep#3, Rep#4 and Rep#6) are related to TRP#1, and transmission occasions of nominal repetitions Rep#2 and Rep#4 (corresponding to actual repetitions Rep#2 and Rep#5) are related to TRP#2. #1-2 is inter-2-nominal-repetition TRP mapping, that is, N1=2. In the two slots (slot n+k and slot n+k+1) of the PUSCH, nominal repetitions Rep#1, Rep#2 and Rep#5 are related to TRP#1, and nominal repetitions Rep#3 and Rep#4 are related to TRP#2. That is, the actual repetitions (actual repetitions Rep#1, Rep#2, Rep#6) corresponding to nominal repetitions Rep#1, Rep#2 and Rep#5 are related to TRP#1, and the actual repetitions (actual repetitions Rep#3, Rep#4 and Rep#5) corresponding to nominal repetitions Rep#3 and Rep#4 are related to TRP#2. In other words, the transmission occasions of nominal repetitions Rep#1, Rep#2 and Rep#5 (corresponding to actual repetitions Rep#1, Rep#2 and Rep#6) are related to TRP#1, and the transmission occasions of nominal repetitions Rep#3 and Rep#4 (corresponding to actual repetitions Rep#3, Rep#4 and Rep#5) are related to TRP#2. #1-3 is inter-4-nominal-repetition TRP mapping, that is, N1=4. In the two slots (slot n+k and slot n+k+1) of the PUSCH, nominal repetitions Rep#1~Rep#4 are related to TRP#1, and nominal repetition Rep#5 is related to TRP#2. That is, the actual repetitions (actual repetitions Rep#1~Rep#5) corresponding to nominal repetitions Rep#1~Rep#4 are related to TRP#1, and the actual repetition (actual repetition Rep#6) corresponding to nominal repetition Rep#5 is related to TRP#2. In other words, the transmission occasions of nominal repetitions Rep#1~Rep#4 (corresponding to actual repetitions Rep#1~Rep#5) are related to TRP#1, and the transmission occasions of nominal repetition Rep#5 (corresponding actual repetition Rep#6) are related to TRP#2.

As shown in FIG. 6, #2-1 is inter-actual-repetition TRP mapping, that is, N2=1. In two slots (slot n+k and slot n+k+1) of the PUSCH, actual repetitions Rep#1, Rep#3 and Rep#5 are related to TRP#1, actual repetitions Rep#2, Rep#4 and Rep#6 are related to TRP#2. That is, actual repetitions Rep#1, Rep#3 and Rep#5 are related to TRP#1, and actual repetitions Rep#2, Rep#4 and Rep#6 are related to TRP#2. Or, in other words, the transmission occasions of actual repetitions Rep#1, Rep#3 and Rep#5 are related to TRP#1, and transmission occasions of actual repetitions Rep#2, Rep#4 and Rep#6 are related to TRP#2. #2-2 is inter-2-actual-repetition TRP mapping, that is, N2=2. In the two slots (slot n+k and slot n+k+1) of the PUSCH, actual repetitions Rep#1, Rep#2, Rep#5 and Rep#6 are related to TRP#1, and actual repetitions Rep#3 and Rep#4 are related to TRP#2. That is, actual repetitions Rep#1, Rep#2, Rep#5 and Rep#6 are related to TRP#1, and actual repetitions Rep#3 and Rep#4 are related to TRP#2. In other words, the transmission occasions of actual repetitions Rep#1, Rep#2, Rep#5 and Rep#6 are related to TRP#1, and the transmission occasions of actual repetitions Rep#3 and Rep#4 are related to TRP#2. #2-3 is inter-4-actual-repetition TRP mapping, that is, N2=4. In the two slots (slot n+k and slot n+k+1) of the PUSCH, actual repetitions Rep#1~Rep#4 are related to TRP#1, and actual repetitions Rep#5 and Rep#6 are related to TRP#2. That is, actual repetitions Rep#1~Rep#4 are related to TRP#1, and actual repetitions Rep#5 and Rep#6 are related to TRP#2. In other words, the transmission occasions of actual repetitions Rep#1~Rep#4 are related to TRP#1, and the transmission occasions of actual repetitions Rep#5 and Rep#6 are related to TRP#2.

As shown in FIG. 6, #3-1 is inter-slot-TRP mapping, that is, N3=1. As the mapping is performed in units of slots, the transmission occasions in slot n+k of the PUSCH (or the transmission occasions of the actual repetitions) are related to TRP#1, and the transmission occasions in slot n+k+1 of the PUSCH (or the transmission occasions of the actual repetitions) are related to TRP#2. #3-2 is inter-2-slot-TRP mapping, that is, N3=2. As the mapping is performed in units of two slots, the transmission occasions of the PUSCH in slot n+k and slot n+k+1 (or the transmission occasions of the actual repetitions) are related to TRP#1.

As shown in FIG. 6, #4 is inter-actual-repetition within a slot TRP mapping. For example, if there are three actual repetitions in slot n+k of the PUSCH, actual repetitions Rep#1 and Rep#3 (or the transmission occasions of actual repetitions Rep#1 and Rep#3) are respectively related to TRP#1, and actual repetition Rep#2 (or the transmission occasion of actual repetition Rep#2) is related to TRP#2. Likewise, if there are three actual repetitions in slot n+k+1 of the PUSCH, actual repetitions Rep#4 and Rep#6 (or the transmission occasions of actual repetitions Rep#4 and Rep#6) are related to TRP#1 respectively, and actual repetition Rep#5 (or the transmission occasion of actual repetition Rep#5) is related to TRP#2.

In the embodiments of this disclosure, in some embodiments, the above uplink data (PUSCHs) do not have corresponding PDCCHs, for example, the above uplink data (PUSCHs) correspond to type 1 configured grant or type 2 configured grant.

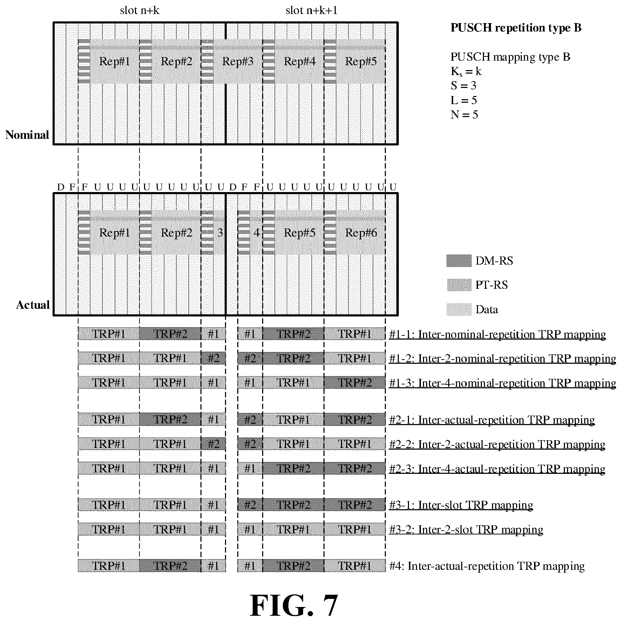

FIG. 7 is a schematic diagram of an example of a mapping relation between transmission occasions of a configured grant PUSCH and TRPs. The scenario in FIG. 7 corresponds to that in FIG. 4, and the transmission occasions of the PUSCH being related to two TRPs is taken as an example.

As shown in FIG. 7, #1-1 is inter-nominal-repetition TRP mapping, that is, N1=1, and its specific implementation is identical to that of #1-1 in FIG. 6. #1-2 is inter-2-nominal-repetition TRP mapping, that is, N1=2, and its specific implementation is identical to that of #1-2 in FIG. 6. #1-3 is inter-4-nominal-repetition TRP mapping, that is, N1=4, and its specific implementation is identical to that of #1-3 in FIG. 6. #2-1 is inter-actual-repetition TRP mapping, that is, N2=1, and its specific implementation is identical to that of #2-1 in FIG. 6. #2-2 is inter-2-actual-repetition TRP mapping, that is, N2=2, and its specific implementation is identical to that of #2-2 in FIG. 6. #2-3 is inter-4-actual-repetition TRP mapping, that is, N2=4, and its specific implementation is identical to that of #2-3 in FIG. 6. #3-1 is inter-slot-TRP mapping, that is, N3=1, and its specific implementation is identical to that of #3-1 in FIG. 6. #3-2 is inter-2-slot-TRP mapping, that is, N3=2, and its specific implementation is identical to that of #3-2 in FIG. 6. #4 is inter-actual-repetition within a slot TRP mapping, and its specific implementation is identical to that of #4 in FIG. 6. Contents that are identical in FIG. 6 and FIG. 7 shall not be described herein any further.

In the embodiments of this disclosure, as shown in FIG. 5, in some embodiments, the method may further include:
502: the terminal equipment receives indication information, the indication information indicating that at least one transmission occasion of the uplink data is related to at least two TRPs.

According to the embodiment of this disclosure, after receiving the above indication information, the terminal equipment may transmit the PUSCH on the transmission occasions of its PUSCH according to the correspondence relation (referred to as a mapping relation) between the transmission occasions and the TRPs indicated by the indication information and according to parameters corresponding to its related TRPs.

In some embodiments, the above indication information is RRC signaling.

For example, for a PUSCH of type 1 configured grant, the RRC signaling may indicate a TRP mapping mode of CG configuration corresponding to the PUSCH. This mode may be used for initial transmission of the PUSCH, that is, the PUSCH has no corresponding PDCCH (used for scheduling the PUSCH). And this mode may also be used for retransmission of the PUSCH, that is, DCI corresponding to the PUSCH is scrambled by a CS-RNTI (configured scheduling radio network Temporary identifier), and an NDI (new data indicator) field of the DCI is 1.

For another example, for a PUSCH of type 2 configured grant, the RRC signaling may indicate a TRP mapping mode of CG configuration corresponding to the PUSCH. This mode may be used for initial transmission of the PUSCH, that is, the PUSCH has no corresponding PDCCH (used for scheduling the PUSCH), or a PDCCH (used for scheduling the PUSCH) corresponding to the PUSCH is scrambled by a CS-RNTI and an NDI field is 1. And this mode may also be used for retransmission of the PUSCH, that is, DCI corresponding to the PUSCH is scrambled by the CS-RNTI, and an NDI field of the DCI is 1.

For a further example, for a PUSCH of type 2 configured grant, the RRC signaling may indicate a TRP mapping mode corresponding to a DCI format of active DCI corresponding to the PUSCH. That is, if the CG active DCI corresponding to the PUSCH is DCI format 0_1, a TRP mapping mode of the PUSCH is determined according to a TRP mapping mode corresponding to DCI format 0_1; and if the CG active DCI corresponding to the PUSCH is DCI format 0_2, a TRP mapping mode of the PUSCH is determined according to a TRP mapping mode corresponding to DCI format 0_2. This mode may be used for both initial transmission of the PUSCH and retransmission of the PUSCH. Definitions of the initial transmission and retransmission are identical to those described above, and shall not be described herein any further.

For still another example, for a PUSCH of type 2 configured grant, if the CG configuration corresponding to the PUSCH configures a TRP mapping mode of the PUSCH, that is, the RRC signaling indicates the above mapping relation, the PUSCH applies the indication. Otherwise, the PUSCH does not perform multi-TRP mapping, that is, the PUSCH is transmitted via a single TRP. This mode may be used for both the initial transmission of PUSCH and retransmission of PUSCH. Definitions of the initial transmission and retransmission are identical to those described above, and shall not be described herein any further.

In the above embodiments, each CG may configure different TRP mapping modes, so that the network device may flexibly configure a TRP mapping relation of a corresponding PUSCH for services corresponding to each CG, thereby improving performances of the system. Moreover, when the retransmission of the PUSCH applies a mechanism identical to that of the initial transmission, implementation complexities are low.

For yet another example, for a dynamically scheduled PUSCH, that is, the PUSCH has a corresponding PDCCH (for scheduling the PUSCH), in some embodiments, the RRC signaling is further used to indicate a specific DCI format (referred to as a first DCI format), which is identical to the DCI format scheduling the uplink data. The first DCI format may be DCI format 0_1, or may be DCI format 0_2.

For example, for a dynamically scheduled PUSCH, the RRC signaling indicates the above mapping relation, and the RRC signaling further indicates DCI format 0_1 (the RRC signaling is for DCI format 0_1), then when the DCI format of the PDCCH scheduling the PUSCH is DCI format 0_1, the terminal equipment performs TRP mapping on the transmission occasions of the PUSCH according to the mapping relation indicated by the RRC signaling.

For another example, for a dynamically scheduled PUSCH, the RRC signaling indicates the above mapping relation, and the RRC signaling further indicates DCI format 0_2 (the RRC signaling is for DCI format 0_2), then when the DCI format of the PDCCH scheduling the PUSCH is DCI format 0_2, the terminal equipment performs TRP mapping on the transmission occasions of the PUSCH according to the mapping relation indicated by the RRC signaling.

The above two examples are examples only. In other embodiments, the RRC signaling may not indicate the above specific DCI format, that is, the RRC signaling only indicates the above mapping relation, in which case no matter the DCI format of the PDCCH scheduling the above PUSCH is DCI format 0_1 or DCI format 0_2, the terminal equipment performs TRP mapping on the transmission occasions of the PUSCH according to the mapping relation indicated by the RRC signaling.

In the above embodiments, each DCI format may configure different TRP mapping modes, so that the network device may flexibly configure TRP mapping relations of corresponding PUSCHs for services corresponding to each DCI format, thereby improving performances of the system. In some scenarios, the DCI formats may be used to distinguish different service types, such as distinguishing URLLC services and eMBB services.

In the above embodiments, the indication mode for the above dynamically scheduled PUSCH may also be used for retransmission of a configured grant PUSCH (type 1 configured grant or type 2 configured grant). A definition of the retransmission is identical to what is described above, and shall not be described herein any further. As the configured grant PUSCH reuses the mechanism used in dynamic scheduling, implementation complexities are low.

In some embodiments, the RRC signaling is further used to indicate a specific DCI format (referred to as a second DCI format). The second DCI format is identical to the configured grant activation DCI format corresponding to the uplink data, and the uplink data correspond to a type 2 configured grant. And the second DCI format may be DCI format 0_1 or DCI format 0_2.

For example, for a PUSCH of type 2 configured grant, if CG activation DCI corresponding to the PUSCH is of DCI format 0_1, a TRP mapping mode of the PUSCH is determined according to a TRP mapping mode indicated by RRC signaling corresponding to DCI format 0_1, and if CG activation DCI corresponding to the PUSCH is of DCI format 0_2, a TRP mapping mode of the PUSCH is determined according to a TRP mapping mode indicated by RRC signaling corresponding to DCI format 0_2. This mode may be used for both initial transmission of the PUSCH and retransmission of the PUSCH. Definitions of the initial transmission and retransmission are identical to those described above, and shall not be described herein any further.

In the above embodiments, different TRP mapping modes may be indicated by the DCI formats of the activation DCI, which is more flexible and conducive to scheduling and indicating different service types by the network device. This is because in some scenarios, the DCI formats may be used to distinguish different service types (such as distinguishing URLLC services and eMBB services). Moreover, when the retransmission of the PUSCH applies a mechanism identical to that of the initial transmission, implementation complexities are low.

In some embodiments, the above indication information is DCI signaling related to the above uplink data. Therefore, the network device may flexibly indicate the TRP mapping relation of the PUSCH according to changes of channel via the DCI, thereby improving performances of the system.

For example, the above indication information may indicate via a field of the above DCI signaling that the at least one transmission occasions is related to the at least two TRPs, i.e. indicating the mapping relation between the transmission occasions of the uplink data and the TRPs. Hence, it is relatively simple in implementation, difficulties and costs are low in implementation, and impact on standardization is small.

In this example, the field of the DCI signaling may be a TDRA field, that is, the above indication information may be indicated via a corresponding unit in a TDRA list in the DCI signaling. Therefore, it is unnecessary to add extra DCI fields, and is helpful to reducing a DCI size, thereby improving reliability of control channel; however, this disclosure is not limited thereto.

In the above embodiments, the DCI signaling related to uplink data may be DCI signaling for scheduling the above uplink data. However, this disclosure is not limited thereto, and for a PUSCH of type 2 configured grant, the DCI signaling related to the uplink data may also be DCI signaling used to activate the configured grant corresponding to the PUSCH.

In the embodiments of this disclosure, the transmission of the uplink data may be the initial transmission of the uplink data or the retransmission of the uplink data, and specific implementations thereof have been described above, which shall not be repeated herein any further.

In the embodiments of this disclosure, in some embodiments, N4 symbols after a first transmission occasion of the uplink data are not used for transmitting the uplink data. The first transmission occasion is a previous (former) transmission occasion of a second transmission occasion of the uplink data in the time domain, and a TRP related to the first transmission occasion and a TRP related to the second transmission occasion are different.

For example, if the second actual repetition is a next actual repetition of the first actual repetition of the PUSCH (in the time domain) and the first actual repetition and the second actual repetition are mapped to different TRPs, the N4 symbols after the first actual repetition will not be used for PUSCH transmission. In this way, latency requirements of uplink beam switching may be lowered, so that a low-capability terminal equipment may obtain spatial diversity gain while taking advantage of the characteristics of low latency of PUSCH repetition type B.

In the above embodiments, N4 may be 1,2,3 or 4.

In the above embodiments, N4 may be indicated by RRC signaling, and a specific indication mode is not limited in this disclosure.

In the above embodiments, the RRC signaling is related to a subcarrier spacing (SCS). For example, N4 is configured per SCS. In general, uplink beam switching times needed by the terminal equipment are different at different SCSs. Therefore, if each SCS may be configured with a corresponding length, the network device may be enabled to indicate/configure an optimal N4 length for each SCS, thereby improving efficiency of the system.

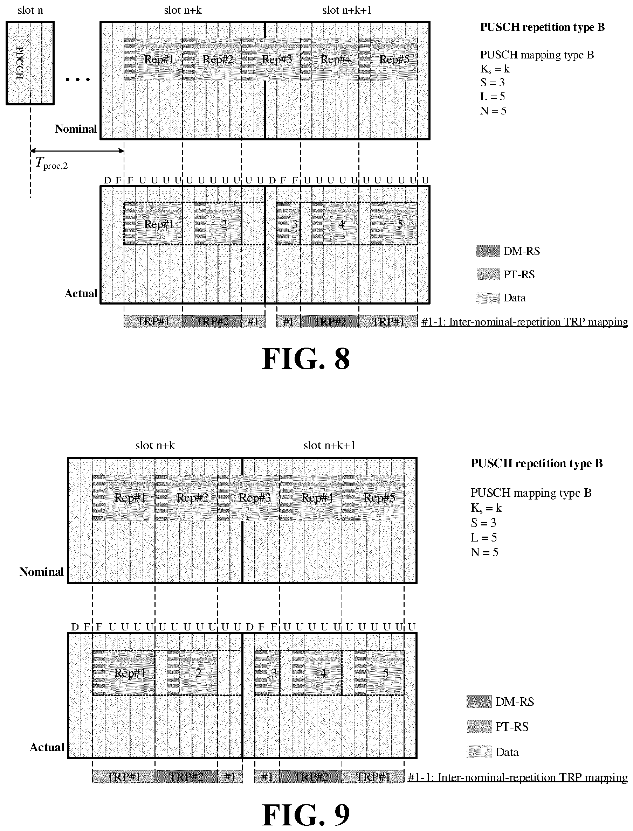

FIG. 8 is a schematic diagram of another example of the mapping relation between transmission occasions of a dynamically scheduled PUSCH and TRPs, and FIG. 9 is a schematic diagram of another example of the mapping relation between transmission occasions of a configured grant PUSCH and TRPs.

In the examples in FIGs. 8 and 9, inter-nominal-repetition TRP mapping is taken as an example.

As shown in FIG. 8 and FIG. 9, as TRP switching may possibly occur for multiple times for repetitions of a PUSCH, for a low-capability UE, if two actual repetitions correspond to different TRPs and a time domain spacing between them is too short, it may result in that former symbols in a latter repetition are unable to be transmitted in time.

In order to solve the above problem, in the embodiments of this disclosure, N4 symbols after an actual repetition of a PUSCH are deemed as invalid symbols, that is, the PUSCH will not be transmitted on these symbols. As shown in FIG. 8 and FIG. 9, after determining the time domain resources corresponding to the actual repetitions, the above invalid symbols may further be excluded. For example, N4=1, and the time domain resources corresponding to the actual repetitions are reduced. For example, as TRP switching is needed when Rep#1 and Rep#2 correspond to different TRPs, a first symbol of Rep#2 originally following Rep#1 is unable to be used for PUSCH transmission, and this is similar for other repetitions. Furthermore, original actual repetition#3 is unable to be used for PUSCH transmission due to that there exists only one valid symbol left. This is because that when L is not 1, an actual repetition needs to be ignored if its length is equal to 1. In this way, the low-capability UE is enabled to use the multi-TRP feature to transmit the uplink data in the manner of PUSCH repetition Type B, so as to achieve low latency and spatial diversity at the same time.

In the embodiments of this disclosure, the TRP is equivalent to at least one of the following:

a transmission configuration indication (TCI) state;
a spatial relation;
a reference signal;
a reference signal group;
an SRS resource group (containing one or more SRS resources);
a spatial domain filter;
a power control parameter; and
a group of time alignment (TA) related parameters.

Reference may be made to relevant technologies for specific meanings of the above concepts, which shall not be described herein any further.

For example, at least one transmission occasion of the PUSCH is related to at least two TRPs, which is equivalent to that at least one transmission occasion of the PUSCH is related to at least two TCI states, that is, the terminal equipment transmits the PUSCH according to parameters corresponding to the at least two TCI states.

For another example, at least one transmission occasion of the PUSCH is related to at least two TRPs, which is equivalent to that at least one transmission occasion of the PUSCH is related to at least two spatial relations.

For a further example, at least one transmission occasion of the PUSCH is related to at least two TRPs, which is equivalent to that at least one transmission occasion of the PUSCH is related to at least two reference signals. Here, the reference signals may be pathloss reference signals (RSs), or CSI-RSs (channel state information reference signals), SSBs (synchronization signal blocks), SRSs (sounding reference signals), etc.; however, this disclosure is not limited thereto.

For still another example, at least one transmission occasion of the PUSCH is related to at least two TRPs, which is equivalent to that at least one transmission occasion of the PUSCH is related to at least two reference signal groups. The reference signal groups are one or more reference signals (RSs). Here, the reference signals may be pathloss reference signals (RSs), or CSI-RSs (channel state information reference signals), SSBs (synchronization signal blocks), SRSs (sounding reference signals), etc.; however, this disclosure is not limited thereto.

For yet another example, at least one transmission occasion of the PUSCH is related to at least two TRPs, which is equivalent to that at least one transmission occasion of the PUSCH is related to at least two spatial filters.

For yet still another example, at least one transmission occasion of the PUSCH is related to at least two TRPs, which is equivalent to that at least one transmission occasion of the PUSCH is related to at least two power control parameters.

It should be noted that FIG. 5 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 5.

According to the method of the embodiment of this disclosure, the uplink data transmitted in the manner of PUSCH repetition type B may be transmitted in a manner of spatial diversity (that is, transmitted to different TRPs), thereby enhancing reliability of uplink data transmission, and efficiently lowering impact of instability of channels on transmission latency.

Embodiment of a second aspect

The embodiment of this disclosure provides a method for transmitting uplink data, which shall be described from a terminal equipment side. What is different from the embodiment of the first aspect is that the method of the embodiment of this disclosure is applicable to uplink data (PUSCHs) transmitted in a manner of PUSCH repetition type A, with contents identical to those in the embodiments of the first aspect being not going to be described herein any further. The embodiment of this disclosure shall be described by taking the scenario of the dynamically scheduled PUSCH shown in FIG. 1 and the scenario of the configured grant PUSCH shown in FIG. 2 as examples.

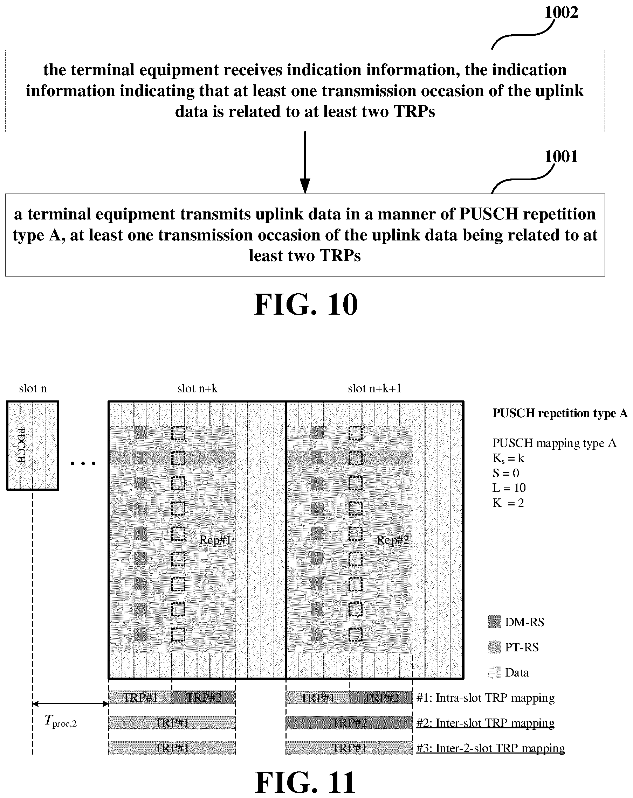

FIG. 10 is a schematic diagram of the method for transmitting uplink data of the embodiment of this disclosure. As shown in FIG. 10, the method includes:
1001: a terminal equipment transmits uplink data in a manner of PUSCH repetition type A, at least one transmission occasion of the uplink data being related to at least two TRPs.

According to the above method of the embodiment of this disclosure, the uplink data transmitted in the manner of PUSCH repetition type A may be transmitted in a spatial diversity manner (that is, transmitted to different TRPs), thereby enhancing reliability of uplink data transmission, and efficiently lowering impact of instability of channels on transmission latency.

In some embodiments, the at least one transmission occasion of the uplink data being related to at least two TRPs refers to that the uplink data are cyclically mapped (related) with the TRPs in units of transmission occasions in M1 slots. For example, transmission occasions in former M1 slots of the uplink data are related to a first TRP in the at least two TRPs, and transmission occasions in next M1 slots of the uplink data are related to a second TRP in the at least two TRPs. And for remaining transmission occasions of the uplink data, a TRP association method identical to the above is also applied (or identical TRP mapping pattern is applied), that is, the remaining transmission occasions of the uplink data are still related (mapped) respectively to the first TRP and the second TRP in units of transmission occasions in M1 slots.

According to the above embodiment, the transmission direction of the PUSCH switches between multiple TRPs in units of slots, which reduces a total number of switching between the TRPs, applicable to a low-capacity terminal equipment (such as a terminal equipment which is limited with respect to the number of switching between TRPs with a unit time), and is conducive to lowering production cost of the terminal equipment; or in a scenario of high reliability requirements and relatively loose latency requirements, the terminal equipment may reduce the number of switching between the TRPs, thereby achieving an effect of power saving.

In the above embodiments, M1 may be 1,2,4 or 8, and an effect thereof is identical to that of N1, which shall not be described herein any further.

In some embodiments, the at least one transmission occasion of uplink data being related to at least two TRPs refers to that the uplink data are cyclically mapped (related) respectively with the TRPs in units of time domain parts in a slot. For example, in a slot associated with the uplink data, a first transmission occasion of the uplink data is related to a first TRP in the at least two TRPs in a first time domain part, and the first transmission occasion is related to a second TRP in the at least two TRPs in a next time domain part.

According to the above embodiment, the PUSCH may be transmitted to multiple TRPs in a slot, which may increase reliability. In addition, when some TRPs are blocked, communication with the network device may be performed via other paths, and latency is relatively low. Mapping PUCCH time domain resources in a slot to different TRPs is helpful to hardware implementations and reducing hardware production costs. This is because hardware usually processes uplink control information in units of slots, and such a TRP association method may match with a processing time at a hardware slot level.

In the above embodiments, each TRP is mapped at least once at each slot of the PUSCH.

In the above embodiments, the number of symbols of each time domain part is a function of a total number of at least two TRPs. Therefore, the time domain resources corresponding to the uplink data in a slot may be respectively mapped to different TRPs, which is conducive to maximizing spatial diversity gains.

In the embodiments of this disclosure, in some embodiments, the above uplink data (PUSCHs) have corresponding PDCCHs.

FIG. 11 is a schematic diagram of an example of a mapping relation between transmission occasions of a dynamically scheduled PUSCH and TRPs. The scenario in FIG. 11 corresponds to that in FIG. 1, and the transmission occasions of the PUSCH being related with two TRPs is taken as an example.

As shown in FIG. 11, #1 is intra-slot TRP mapping. A PUSCH repetition (PUSCH transmission in a slot) may be divided into $N_{intra}$ time domain parts, each time domain part mapping a TRP separately. A length from a first time domain part to an $(N_{intra}\text{-}1)$-th time domain part is $\left\lfloor \dfrac{L}{N_{intra}} \right\rfloor$, and a length of an $N_{intra}$-th time domain part is $L - N_{intra}\left\lfloor \dfrac{L}{N_{intra}} \right\rfloor$.

In some embodiments, the number of TRPs corresponding to the PUSCH is equal to $N_{intra}$, that is, TRPs corresponding to the PUSCH correspond respectively to different time domain parts of the PUSCH in each slot. As shown in FIG. 11, the PUSCH in each slot is divided into two parts in the time domain (i.e. two time domain parts), a former part (a first time domain part) corresponding to TRP#1, and a latter part (a second time domain part) corresponding to TRP#2.

In some embodiments, each PUSCH part at least contains one DM-RS symbol, thereby enabling a PUSCH part transmitted to each TRP may be decoded independently. For example, for intra-slot TRP mapping, according to an existing DM-RS generation mode, the PUSCH part corresponding to TRP#2 may possibly have no corresponding DM-RS. Therefore, in order to enable the PUSCH part corresponding to TRP#2 to be decoded separately, extra DM-RSs need to be added. A time domain position of a corresponding DM-RS is shown in the dotted box in FIG. 11, i.e. a sixth symbol of slot n+k and a sixth symbol of slot n+k+1.

As shown in FIG. 11, #2 is inter-slot TRP mapping, that is, M1=1. As the mapping is performed in units of slots, transmission occasions of the PUSCH in slot n+k are related to TRP#1, while transmission occasions of the PUSCH in slot n+k+1 are related to TRP#2. #3 is inter-2-slot-TRP mapping, that is, M1=2. As the mapping is performed in units of two slots, transmission occasions of the PUSCH in slot n+k and slot n+k+1 are all related to TRP#1.

In the embodiments of this disclosure, in some embodiments, the above uplink data correspond to type 1 configured grant or type 2 configured grant.

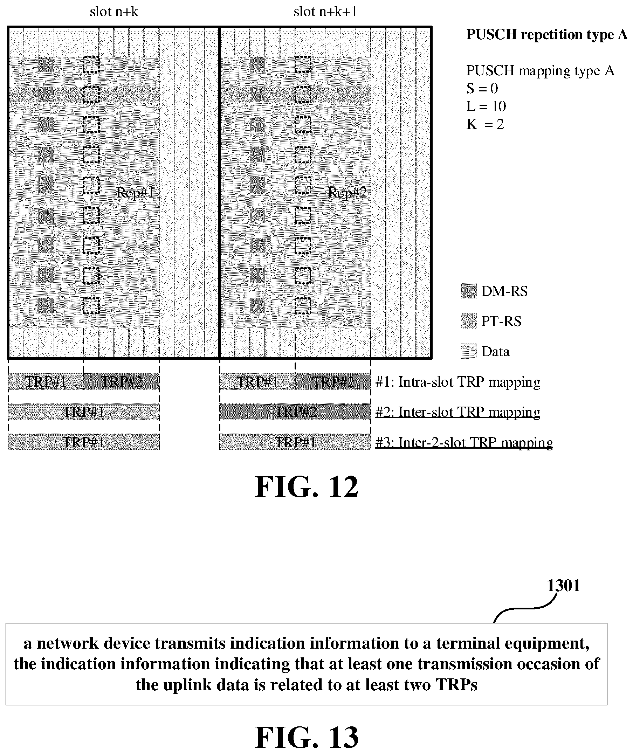

FIG. 12 is a schematic diagram of an example of a mapping relation between transmission occasions of a configured grant PUSCH and TRPs. The scenario in FIG. 12 corresponds to that in FIG. 2, and the transmission occasions of the PUSCH being related to two TRPs is taken as an example.

As shown in FIG. 12, #1 is intra-slot-TRP mapping, its specific implementation being identical to that of #1 in FIG. 11, and being not going to be described herein any further. #2 is inter-slot-TRP mapping, that is, M1=1, its specific implementation being identical to that of #2 in FIG. 11, and being not going to be described herein any further. #3 is inter-2-slot-TRP mapping, that is, M1=2, its specific implementation being identical to that of #3 in FIG. 6, and being not going to be described herein any further.

In the embodiments of this disclosure, as shown in FIG. 10, in some embodiments, the method may further include:

1002: the terminal equipment receives indication information, the indication information indicating that at least one transmission occasion of the uplink data is related to at least two TRPs.

According to the embodiment of this disclosure, after receiving the above indication information, the terminal equipment may transmit the PUSCH on the transmission occasions of its PUSCH according to the correspondence relation (referred to as a mapping relation) between the transmission occasions and the TRPs indicated by the indication information and according to parameters corresponding to its related TRPs.

Implementation of 1002 is identical to that of 502 in FIG. 5, its contents being incorporated herein, which shall not be described herein any further.

For example, in the embodiments of this disclosure, as in the embodiments of the first aspect, in some embodiments, the indication information is RRC signaling.

In some embodiments, the RRC signaling is further used to indicate first DCI format, which is identical to the DCI format scheduling the uplink data.

In some embodiments, the RRC signaling is further used to indicate a second DCI format, which is identical to the configured grant activation DCI format corresponding to the uplink data, and the uplink data correspond to the type 2 configured grant.

For example, in the embodiments of this disclosure, as in the embodiments of the first aspect, in some embodiments, the indication information is DCI signaling related to the uplink data.

In some embodiments, the indication information indicates via a field of the DCI signaling that the at least one transmission occasion is related to the at least two TRPs.

In some embodiments, the field of the DCI signaling is a TDRA field.

In some embodiments, the DCI signaling related to the uplink data is DCI signaling scheduling the uplink data.

In some embodiments, the RRC signaling related to the uplink data is DCI signaling used for activating the configured grant corresponding to the uplink data, and the uplink data correspond to the type 2 configured grant.

In the embodiments of this disclosure, as in the embodiments of the first aspect, transmission of the uplink data may refer to initial transmission of the uplink data, or may refer to retransmission of the uplink data.

In the embodiments of this disclosure, as in the embodiments of the first aspect, N4 symbols after a first transmission occasion of the uplink data are not used for transmitting the uplink data; the first transmission occasion is a last transmission occasion of a second transmission occasion of the uplink data in the time domain; and a TRP related to the first transmission occasion is different from a TRP related to the second transmission occasion.

In some embodiments, the number of N4 is one of the following: 1,2,3,4.

In some embodiments, the N4 is indicated by RRC signaling.

In some embodiments, the RRC signaling is related to a subcarrier spacing (SCS).

In the embodiments of this disclosure, as in the embodiments of the first aspect, the TRP is equivalent to at least one of the following:

a transmission configuration indication state;
a spatial relation;
a reference signal;
a reference signal group;
an SRS resource group;
a spatial domain filter;
a power control parameter; and
a group of time alignment (TA) related parameters.

According to the method of the embodiment of this disclosure, the uplink data transmitted in the manner of PUSCH repetition type A may be transmitted in a manner of spatial diversity (that is, transmitted to different TRPs), thereby enhancing reliability of uplink data transmission, and efficiently lowering impact of instability of channels on transmission latency.

Embodiment of a third aspect

The embodiment of this disclosure provides a method for indicating uplink data transmission, which shall be described from a network side, with contents identical to those in the embodiments of the first and second aspects being not going to be described herein any further.

FIG. 13 is a schematic diagram of the method for indicating uplink data transmission of an embodiment of this disclosure. As shown in FIG. 13, the method includes:

1301: a network device transmits indication information to a terminal equipment, the indication information indicating that at least one transmission occasion of the uplink data is related to at least two TRPs.

The following contents correspond to the embodiment of the first aspect.

In some embodiments, the uplink data are transmitted in a manner of PUSCH repetition type B, and the at least one transmission occasion of the uplink data being related to at least two TRPs refers to that, transmission occasions of former N1 nominal repetitions of the uplink data are related to a first TRP in the at least two TRPs, and transmission occasions of next N1 nominal repetitions of the uplink data are related to a second TRP in the at least two TRPs.

In some embodiments, the remaining transmission occasions of the uplink data are respectively related to the first TRP and the second TRP in units of transmission occasions of N1 nominal repetitions.

In the above embodiments, the number of N1 is one of the following: 1,2,4,8.

In some embodiments, the uplink data are transmitted in a manner of PUSCH repetition type B, and the at least one transmission occasion of the uplink data being related to at least two TRPs refers to that, transmission occasions of former N2 actual repetitions of the uplink data are related to a first TRP in the at least two TRPs, and transmission occasions of next N2 actual repetitions of the uplink data are related to a second TRP in the at least two TRPs.

In some embodiments, the remaining transmission occasions of the uplink data are related respectively to the first TRP and the second TRP in units of transmission occasions of N2 actual repetitions.

In some embodiments, the number of N2 is one of the following: 1,2,4,8.

In some embodiments, the uplink data are transmitted in a manner of PUSCH repetition type B, and the at least one transmission occasion of the uplink data being related to at least two TRPs refers to that,

transmission occasions in former N3 slots of the uplink data are related to a first TRP in the at least two TRPs, and transmission occasions in next N3 slots of the uplink data are related to a second TRP in the at least two TRPs.

In some embodiments, the remaining transmission occasions of the uplink data are related respectively to the first TRP and the second TRP in units of transmission occasions in N3 slots.

In some embodiments, the number of N3 is one of the following: 1,2,4,8.

The following contents correspond to the embodiment of the second aspect.

In some embodiments, the uplink data are transmitted in a manner of PUSCH repetition type A, and the at least one transmission occasion of the uplink data being related to at least two TRPs refers to that, transmission occasions of the uplink data in former M1 slots are related to a first TRP in the at least two TRPs, and transmission occasions of the uplink data in next M1 slots are related to a second TRP in the at least two TRPs.

In some embodiments, the remaining transmission occasions of the uplink data are respectively related to the first TRP and the second TRP in units of transmission occasions in M1 slots.

In some embodiments, the number of M1 is one of the following: 1,2,4,8.

In some embodiments, the uplink data are transmitted in a manner of PUSCH repetition type A, and the at least one transmission occasion of the uplink data being related to at least two TRPs refers to that, in a slot associated with the uplink data, a first transmission occasion of the uplink data is related to a first TRP in the at least two TRPs in a first time domain part, and the first transmission occasion is related to a second TRP in the at least two TRPs in a next time domain part.

The following contents correspond to the embodiment of the first aspect and the embodiment of the second aspect.

In some embodiments, the indication information is RRC signaling.

In some embodiments, the RRC signaling is further used to indicate a first DCI format, the first DCI format being identical to the DCI format scheduling the uplink data.

In some embodiments, the RRC signaling is further used to indicate a second DCI format, the second DCI format being identical to the configured grant activation DCI format corresponding to the uplink data, and the uplink data correspond to a type 2 configured grant.

In some embodiments, the indication information is DCI signaling related to the uplink data.

In some embodiments, the indication information indicates via a field of the DCI signaling that the at least one transmission occasion is related to the at least two TRPs.

In some embodiments, the field of the DCI signaling is a TDRA field.

In some embodiments, the DCI signaling related to the uplink data is the DCI signaling scheduling the uplink data.

In some embodiments, the DCI signaling related to the uplink data is DCI signaling used for activating the configured grant corresponding to the uplink data, and the uplink data correspond to a type 2 configured grant.

In the embodiments of this disclosure, the TRP is equivalent to at least one of the following:

a transmission configuration indication state;
a spatial relation;
a reference signal;
a reference signal group;
an SRS resource group;
a spatial domain filter;
a power control parameter; and
a group of time alignment (TA) related parameters.

According to the method of the embodiment of this disclosure, the uplink data is transmitted in a manner of spatial diversity (that is, transmitted to different TRPs), thereby enhancing reliability of uplink data transmission, and efficiently lowering impact of instability of channels on transmission latency.

Embodiment of a fourth aspect

The embodiment of this disclosure provides an apparatus for transmitting uplink data. The apparatus may be, for example, a terminal equipment, or may be one or more components or assemblies configured in a terminal equipment.

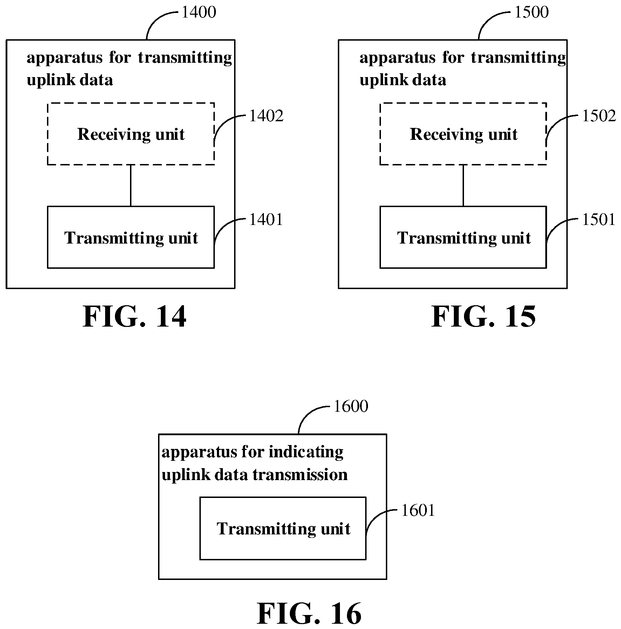

FIG. 14 is a schematic diagram of the apparatus for transmitting uplink data of the embodiment of this disclosure. As principles of the apparatus for solving problems are similar to the method of the embodiment of the first aspect, reference may be made to the implementation of the method of the embodiment of the first aspect for specific implementations of the apparatus, with identical contents being not going to be repeated herein any further.

As shown in FIG. 14, the apparatus 1400 for transmitting uplink data of the embodiment of this disclosure includes a transmitting unit 1401 configured to transmit uplink data in a manner of PUSCH repetition type B, at least one transmission occasion of the uplink data being related to at least two TRPs.

In some embodiments, the at least one transmission occasion of the uplink data being related to at least two TRPs refers to that, transmission occasions of former N1 nominal repetitions of the uplink data are related to a first TRP in the at least two TRPs, and transmission occasions of next N1 nominal repetitions of the uplink data are related to a second TRP in the at least two TRPs.

In some embodiments, the remaining transmission occasions of the uplink data are related respectively to the first TRP and the second TRP in units of transmission occasions of N1 nominal repetitions.

In some embodiments, the number of N1 is one of the following: 1,2,4,8.

In some embodiments, the at least one transmission occasion of the uplink data being related to at least two TRPs refers to that,

transmission occasions of former N2 actual repetitions of the uplink data are related to a first TRP in the at least two TRPs, and transmission occasions of next N2 actual repetitions of the uplink data are related to a second TRP in the at least two TRPs.

In some embodiments, the remaining transmission occasions of the uplink data are related respectively to the first TRP and the second TRP in units of transmission occasions of N2 actual repetitions.

In some embodiments, the number of N2 is one of the following: 1,2,4,8.

In some embodiments, the at least one transmission occasion of the uplink data being related to at least two TRPs refers to that,

transmission occasions in former N3 slots of the uplink data are related to a first TRP in the at least two TRPs, and transmission occasions in next N3 slots of the uplink data are related to a second TRP in the at least two TRPs.

In some embodiments, the remaining transmission occasions of the uplink data are related respectively to the first TRP and the second TRP in units of transmission occasions in N3 slots.

In some embodiments, the number of N3 is one of the following: 1,2,4,8.

In some embodiments, the uplink data have corresponding PDCCHs.

In some embodiments, the uplink data correspond to type 1 configured grant or type 2 configured grant.

In some embodiments, as shown in FIG. 14, the apparatus 1400 further includes:

a receiving unit 1402 configured to receive indication information, the indication information indicating that at least one transmission occasion of the uplink data is related to at least two TRPs.

In some embodiments, the indication information is RRC signaling.

In some embodiments, the RRC signaling is further used to indicate a first DCI format, the first DCI format being identical to the DCI format scheduling the uplink data.

In some embodiments, the RRC signaling is further used to indicate a second DCI format, the second DCI format being identical to the configured grant activation DCI format corresponding to the uplink data, and the uplink data correspond to a type 2 configured grant.

In some embodiments, the indication information is DCI signaling related to the uplink data.

In some embodiments, the indication information indicates via a field of the DCI signaling that the at least one transmission occasion is related to the at least two TRPs.

In some embodiments, the field of the DCI signaling is a TDRA field.

In some embodiments, the DCI signaling related to the uplink data is DCI signaling scheduling the uplink data.

In some embodiments, the DCI signaling related to the uplink data is DCI signaling used for activating the configured grant corresponding to the uplink data, and the uplink data correspond to the type 2 configured grant.

In some embodiments, transmission of the uplink data refers to initial transmission of the uplink data.

In some embodiments, transmission of the uplink data refers to retransmission of the uplink data.

In the embodiments of this disclosure, N4 symbols after a first transmission occasion of the uplink data are not used for transmitting the uplink data; that is, the transmitting unit 1401 does not transmit uplink data at N4 symbols after the first transmission occasion of the uplink data. Here, the first transmission occasion is a last transmission occasion of a second transmission occasion of the uplink data in the time domain; and a TRP related to the first transmission occasion is different from a TRP related to the second transmission occasion.

In some embodiments, the number of N4 is one of the following: 1,2,3,4.

In some embodiments, the N4 is indicated by RRC signaling.

In some embodiments, the RRC signaling is related to a subcarrier spacing (SCS).

In the embodiments of this disclosure, the TRP is equivalent to at least one of the following:

a transmission configuration indication state;
a spatial relation;
a reference signal;
a reference signal group;
an SRS resource group;
a spatial domain filter;
a power control parameter; and
a group of time alignment (TA) related parameters.

It should be noted that the components or modules related to this disclosure are only described above. However, this disclosure is not limited thereto, and the apparatus 1400 for transmitting uplink data may further include other components or modules, and reference may be made to related techniques for particulars of these components or modules.

Furthermore, for the sake of simplicity, connection relationships between the components or modules or signal profiles thereof are only illustrated in FIG. 14. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

According to the embodiment of this disclosure, the uplink data is transmitted in a manner of spatial diversity (that is, transmitted to different TRPs), thereby enhancing reliability of uplink data transmission, and efficiently lowering impact of instability of channels on transmission latency.

Embodiment of a fifth aspect

The embodiment of this disclosure provides an apparatus for transmitting uplink data. The apparatus may be, for example, a terminal equipment, or may be one or more components or assemblies configured in a terminal equipment.

FIG. 15 is a schematic diagram of the apparatus for transmitting uplink data of the embodiment of this disclosure. As principles of the apparatus for solving problems are similar to the method of the embodiment of the second aspect, reference may be made to the implementation of the method of the embodiment of the second aspect for specific implementations of the apparatus, with identical contents being not going to be repeated herein any further.

As shown in FIG. 15, the apparatus 1500 for transmitting uplink data of the embodiment of this disclosure includes a transmitting unit 1501 configured to transmit uplink data in a manner of PUSCH repetition type A, at least one transmission occasion of the uplink data being related to at least two TRPs.

In some embodiments, the at least one transmission occasion of the uplink data being related to at least two TRPs refers to that,

transmission occasions in former M1 slots of the uplink data are related to a first TRP in the at least two TRPs, and transmission occasions in next M1 slots of the uplink data are related to a second TRP in the at least two TRPs.

In some embodiments, the remaining transmission occasions of the uplink data are related respectively to the first TRP and the second TRP in units of transmission occasions in M1 slots.

In some embodiments, the number of M1 is one of the following: 1,2,4,8.

In some embodiments, the at least one transmission occasion of the uplink data being related to at least two TRPs refers to that,

in a slot associated with the uplink data, a first transmission occasion of the uplink data is related to a first TRP in the at least two TRPs in a first time domain part, and the first transmission occasion is related to a second TRP in the at least two TRPs in a next time domain part.

In some embodiments, the uplink data have corresponding PDCCHs.

In some embodiments, the uplink data correspond to type 1 configured grant or type 2 configured grant.

In some embodiments, as shown in FIG. 15, the apparatus 1500 further includes:

a receiving unit 1502 configured to receive indication information, the indication information indicating that at least one transmission occasion of the uplink data is related to at least two TRPs.

In some embodiments, the indication information is RRC signaling.

In some embodiments, the RRC signaling is further used to indicate a first DCI format, the first DCI format being identical to a DCI format scheduling the uplink data.

In some embodiments, the RRC signaling is further used to indicate a second DCI format, the second DCI format being identical to a configured grant activation DCI format corresponding to the uplink data, and the uplink data correspond to a type 2 configured grant.

In some embodiments, the indication information is DCI signaling related to the uplink data.

In some embodiments, the indication information indicates via a field of the DCI signaling that the at least one transmission occasion is related to the at least two TRPs.

In some embodiments, the field of the DCI signaling is a TDRA field.

In some embodiments, the DCI signaling related to the uplink data is DCI signaling scheduling the uplink data.

In some embodiments, the DCI signaling related to the uplink data is DCI signaling used for activating the configured grant corresponding to the uplink data, and the uplink data correspond to the type 2 configured grant.

In some embodiments, transmission of the uplink data refers to initial transmission of the uplink data.

In some embodiments, transmission of the uplink data refers to retransmission of the uplink data.

In some embodiments, N4 symbols after a first transmission occasion of the uplink data are not used for transmitting the uplink data; that is, the transmitting unit 1401 does not transmit uplink data at N4 symbols after the first transmission occasion of the uplink data. Here, the first transmission occasion is a last transmission occasion of a second transmission occasion of the uplink data in the time domain; and a TRP related to the first transmission occasion is different from a TRP related to the second transmission occasion.

In some embodiments, the number of N4 is one of the following: 1,2,3,4.

In some embodiments, the N4 is indicated by RRC signaling.

In some embodiments, the RRC signaling is related to a subcarrier spacing (SCS).

In the embodiments of this disclosure, the TRP is equivalent to at least one of the following:

a transmission configuration indication state;
a spatial relation;
a reference signal;
a reference signal group;
an SRS resource group;

a spatial domain filter;

a power control parameter; and

a group of time alignment (TA) related parameters.

It should be noted that the components or modules related to this disclosure are only described above. However, this disclosure is not limited thereto, and the apparatus 1500 for transmitting uplink data may further include other components or modules, and reference may be made to related techniques for particulars of these components or modules.

Furthermore, for the sake of simplicity, connection relationships between the components or modules or signal profiles thereof are only illustrated in FIG. 15. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

According to the embodiment of this disclosure, the uplink data is transmitted in a manner of spatial diversity (that is, transmitted to different TRPs), thereby enhancing reliability of uplink data transmission, and efficiently lowering impact of instability of channels on transmission latency.

Embodiment of a sixth aspect

The embodiment of this disclosure provides an apparatus for indicating uplink data transmission. The apparatus may be, for example, a network device, or may be one or more components or assemblies configured in a network device.

FIG. 16 is a schematic diagram of the apparatus for indicating uplink data transmission of the embodiment of this disclosure. As principles of the apparatus for solving problems are similar to the method of the embodiment of the third aspect, reference may be made to the implementation of the method of the embodiment of the third aspect for specific implementations of the apparatus, with identical contents being not going to be repeated herein any further.

As shown in FIG. 16, the apparatus 1600 for indicating uplink data transmission of the embodiment of this disclosure includes a transmitting unit 1601 configured to transmit indication information to a terminal equipment, the indication information indicating that at least one transmission occasion of the uplink data is related to at least two TRPs.

In some embodiments, the uplink data are transmitted in the manner of PUSCH repetition type B. Reference may be made to the embodiment of the first aspect for particular contents that at least one transmission occasion of the uplink data is related to at least two TRPs, which shall not be described herein any further.

In some embodiments, the uplink data are transmitted in the manner of PUSCH repetition type A.

Reference may be made to the embodiment of the second aspect for particular contents that at least one transmission occasion of the uplink data is related to at least two TRPs, which shall not be described herein any further.

In some embodiments, reference may be made to the embodiment of the first aspect for contents of the indication information, which shall not be described herein any further.

It should be noted that the components or modules related to this disclosure are only described above. However, this disclosure is not limited thereto, and the apparatus 1600 for indicating uplink data transmission may further include other components or modules, and reference may be made to related techniques for particulars of these components or modules.

According to the embodiment of this disclosure, the uplink data is transmitted in a manner of spatial diversity (that is, transmitted to different TRPs), thereby enhancing reliability of uplink data transmission, and efficiently lowering impact of instability of channels on transmission latency.

Embodiment of a seventh aspect

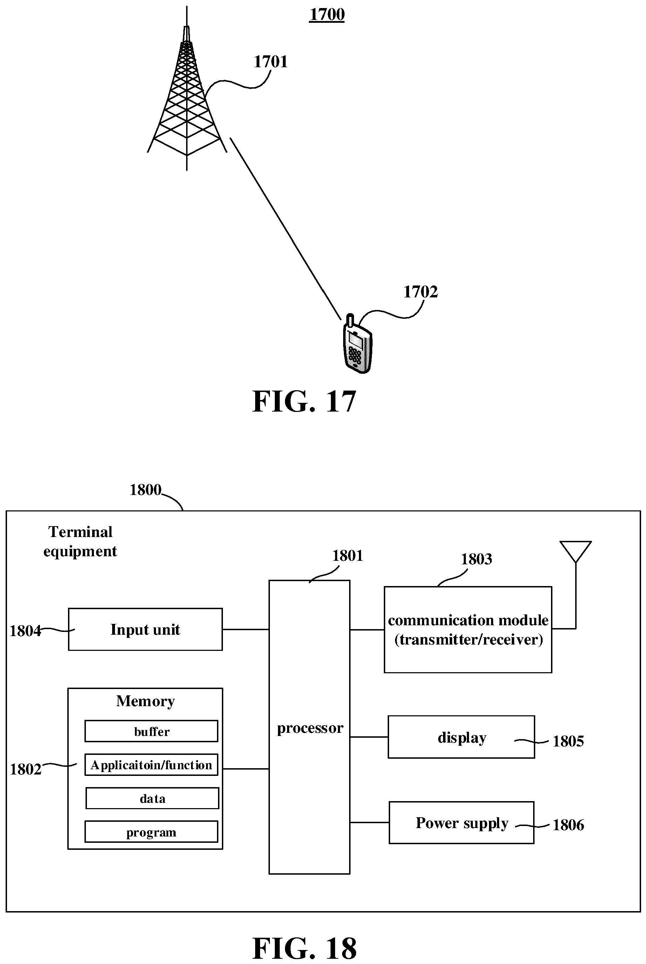

The embodiment of this disclosure provides a communication system. FIG. 17 is a schematic diagram of the communication system 1700. As shown in FIG. 17, the communication system 1700 includes a network device 1701 and a terminal equipment 1702. For the sake of simplification, description is given in FIG. 17 by taking only one terminal equipment and one network device as examples; however, the embodiment of this disclosure is not limited thereto.

In the embodiments of this disclosure, existing services or services that may be implemented in the future may be performed between the network device 1701 and the terminal equipment 1702. For example, such services may include but not limited to an enhanced mobile broadband (eMBB), massive machine type communication (mMTC), ultra-reliable and low-latency communication (URLLC), and vehicle to everything communication (V2X), etc.

In some embodiments, the network device 1701 transmits indication information to the terminal equipment 1702, the indication information indicating that at least one transmission occasion of the uplink data is related to at least two TRPs; and the terminal equipment 1702 receives the indication information, and transmits the uplink data in a manner of PUSCH repetition type B or USCH repetition type A. Reference may be made to the embodiment of the third aspect and the embodiment of the sixth aspect for contents related to the network device 1701, which shall not be described herein any further. And reference may be made to the embodiment of the first aspect, the embodiment of the second aspect, the embodiment of the fourth aspect and the embodiment of the fifth aspect for contents related to the terminal equipment 1702, which shall not be described herein any further.

The embodiment of this disclosure further provides a terminal equipment. The terminal equipment may be, for example, a UE; however, this disclosure is not limited thereto, and it may also be another equipment.

FIG. 18 is a schematic diagram of the terminal equipment of the embodiment of this disclosure. As shown in FIG. 18, the terminal equipment 1800 may include a processor 1801 and a memory 1802, the memory 1802 storing data and a program and being coupled to the processor 1801. It should be noted that this figure is illustrative only, and other types of structures may also be used, so as to supplement or replace this structure and achieve a telecommunications function or other functions.

For example, the processor 1801 may be configured to execute a program to carry out the method as described in the embodiments of the first aspect or the embodiments of the second aspect.

As shown in FIG. 18, the terminal equipment 1800 may further include a communication module 1803, an input unit 1804, a display 1805, and a power supply 1806; wherein functions of the above components are similar to those in the related art, which shall not be described herein any further. It should be noted that the terminal equipment 1800 does not necessarily include all the parts shown in FIG. 18, and the above components are not necessary. Furthermore, the terminal equipment 1800 may include parts not shown in FIG. 18, and the related art may be referred to.

The embodiment of this disclosure further provides a network device, which may be, for example, a gNB. However, this disclosure is not limited thereto, and it may also be another network device.

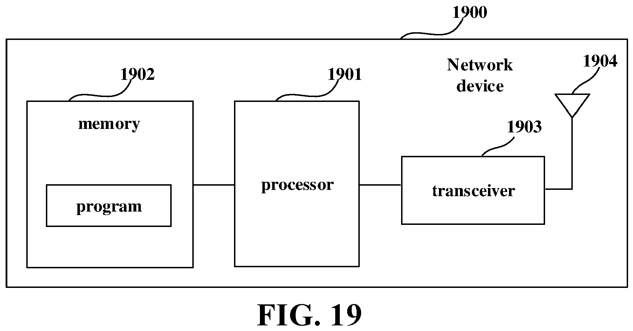

FIG. 19 is a schematic diagram of a structure of the network device of the embodiment of this disclosure. As shown in FIG. 19, the network device 1900 may include a processor 1901 (such as a central processing unit (CPU)) and a memory 1902, the memory 1902 being coupled to the processor 1901. The memory 1902 may store various data, and furthermore, it may store a program for information processing, and execute the program under control of the processor 1901.

For example, the processor 1910 may be configured to execute a program to carry out the method as described in the embodiments of the third aspect.

Furthermore, as shown in FIG. 19, the network device 1900 may include a transceiver 1903, and an antenna 1904, etc. Functions of the above components are similar to those in the related art, and shall not be described herein any further. It should be noted that the network device 1900 does not necessarily include all the parts shown in FIG. 19, and furthermore, the network device 1900 may include parts not shown in FIG. 19, and the related art may be referred to.

An embodiment of this disclosure provides a computer readable program, which, when executed in a terminal equipment, will cause a computer to carry out the method as described in the embodiments of the first or the second aspect in the terminal equipment.

An embodiment of this disclosure provides a storage medium storing a computer readable program, which will cause a computer to carry out the method as described in the embodiments of the first or the second aspect in a terminal equipment.

An embodiment of this disclosure provides a computer readable program, which, when executed in a network device, will cause a computer to carry out the method as described in the embodiments of the third aspect in the network device.

An embodiment of this disclosure provides a storage medium storing a computer readable program, which will cause a computer to carry out the method as described in the embodiments of the third aspect in a network device.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

As to implementations containing the above embodiments, following supplements are further disclosed.

1. A method for transmitting uplink data, wherein the method includes:
transmitting uplink data by a terminal equipment in a manner of PUSCH repetition type B, at least one transmission occasion of the uplink data being related to two TRPs.

2. The method according to supplement 1, wherein the at least one transmission occasion of the uplink data being related to at least two TRPs refers to that, transmission occasions of former N1 nominal repetitions of the uplink data are related to a first TRP in the at least two TRPs, and transmission occasions of next N1 nominal repetitions of the uplink data are related to a second TRP in the at least two TRPs.

3. The method according to supplement 2, wherein remaining transmission occasions of the uplink data are related respectively to the first TRP and the second TRP in units of transmission occasions of N1 nominal repetitions.

4. The method according to supplement 1, wherein the number of N1 is one of the following: 1,2,4,8.

5. The method according to supplement 1, wherein the at least one transmission occasion of the uplink data being related to at least two TRPs refers to that, transmission occasions of former N2 actual repetitions of the uplink data are related to a first TRP in the at least two TRPs, and transmission occasions of next N2 actual repetitions of the uplink data are related to a second TRP in the at least two TRPs.

6. The method according to supplement 5, wherein remaining transmission occasions of the uplink data are related respectively to the first TRP and the second TRP in units of transmission occasions of N2 actual repetitions.

7. The method according to supplement 5, wherein the number of N2 is one of the following: 1,2,4,8.

8. The method according to supplement 1, wherein the at least one transmission occasion of the uplink data being related to at least two TRPs refers to that, transmission occasions in former N3 slots of the uplink data are related to a first TRP in the at least two TRPs, and transmission occasions in next N3 slots of the uplink data are related to a second TRP in the at least two TRPs.

9. The method according to supplement 8, wherein remaining transmission occasions of the uplink data are related respectively to the first TRP and the second TRP in units of transmission occasions in N3 slots.

10. The method according to supplement 8, wherein the number of N3 is one of the following: 1,2,4,8.

10a. The method according to supplement 1, wherein the uplink data have corresponding PDCCHs.

10b. The method according to supplement 1, wherein the uplink data correspond to type 1 configured grant or type 2 configured grant.

11. The method according to supplement 1, wherein the method further includes:
receiving indication information by the terminal equipment, the indication information indicating that at least one transmission occasion of the uplink data is related to at least two TRPs.

12. The method according to supplement 11, wherein the indication information is RRC signaling.

13. The method according to supplement 12, wherein,
the RRC signaling is further used to indicate a first DCI format, the first DCI format being identical to a DCI format scheduling the uplink data.

14. The method according to supplement 12, wherein,
the RRC signaling is further used to indicate a second DCI format, the second DCI format being identical to a configured grant activation DCI format corresponding to the uplink data, the uplink data corresponding to a type 2 configured grant.

15. The method according to supplement 11, wherein the indication information is DCI signaling related to the uplink data.

16. The method according to supplement 15, wherein the indication information indicates via a field of the DCI signaling that the at least one transmission occasion is related to the at least two TRPs.

17. The method according to supplement 16, wherein the field of the DCI signaling is a TDRA field.

18. The method according to supplement 15, wherein the DCI signaling related to the uplink data is DCI signaling scheduling the uplink data.

19. The method according to supplement 15, wherein,

the DCI signaling related to the uplink data is DCI signaling used for activating the configured grant corresponding to the uplink data, and the uplink data correspond to the type 2 configured grant.

20. The method according to supplement 1, wherein transmission of the uplink data is initial transmission of the uplink data.

21. The method according to supplement 1, wherein transmission of the uplink data is retransmission of the uplink data.

22. The method according to supplement 1, wherein,

N4 symbols after a first transmission occasion of the uplink data are not used for transmitting the uplink data;
the first transmission occasion is a last transmission occasion of a second transmission occasion of the uplink data in the time domain;
and a TRP related to the first transmission occasion is different from a TRP related to the second transmission occasion.

23. The method according to supplement 22, wherein the number of N4 is one of the following: 1,2,3,4.

24. The method according to supplement 22, wherein the N4 is indicated by RRC signaling.

25. The method according to supplement 24, wherein the RRC signaling is related to a subcarrier spacing (SCS).

26. The method according to any one of supplements 1-25, wherein the TRP is equivalent to at least one of the following:

a transmission configuration indication state;
a spatial relation;
a reference signal;
a reference signal group;
an SRS resource group;
a spatial domain filter;
a power control parameter; and
a group of time alignment (TA) related parameters.

27. A method for transmitting uplink data, wherein the method includes:
transmitting uplink data by a terminal equipment in a manner of PUSCH repetition type A, at least one transmission occasion of the uplink data being related to at least two TRPs.

28. The method according to supplement 27, wherein the at least one transmission occasion of the uplink data being related to at least two TRPs refers to that, transmission occasions in former M1 slots of the uplink data are related to a first TRP in the at least two TRPs, and transmission occasions in next M1 slots of the uplink data are related to a second TRP in the at least two TRPs.

29. The method according to supplement 28, wherein remaining transmission occasions of the uplink data are related respectively to the first TRP and the second TRP in units of transmission occasions in M1 slots.

30. The method according to supplement 28, wherein the number of M1 is one of the following: 1,2,4,8.

31. The method according to supplement 27, wherein the at least one transmission occasion of the uplink data being related to at least two TRPs refers to that,

in a slot associated with the uplink data, a first transmission occasion of the uplink data is related to a first TRP in the at least two TRPs in a first time domain part, and the first transmission occasion is related to a second TRP in the at least two TRPs in a next time domain part.

31a. The method according to supplement 27, wherein the uplink data have corresponding PDCCHs.

31b. The method according to supplement 27, wherein the uplink data correspond to type 1 configured grant or type 2 configured grant.

32. The method according to supplement 27, wherein the method further includes:
receiving indication information by the terminal equipment, the indication information indicating that at least one transmission occasion of the uplink data is related to at least two TRPs.

33. The method according to supplement 32, wherein the indication information is RRC signaling.

34. The method according to supplement 33, wherein,
the RRC signaling is further used to indicate a first DCI format, the first DCI format being identical to a DCI format scheduling the uplink data.

35. The method according to supplement 33, wherein,
the RRC signaling is further used to indicate a second DCI format, the second DCI format being identical to a configured grant activation DCI format corresponding to the uplink data, the uplink data corresponding to a type 2 configured grant.

36. The method according to supplement 32, wherein the indication information is DCI signaling related to the uplink data.

37. The method according to supplement 36, wherein the indication information indicates via a field of the DCI signaling that the at least one transmission occasion is related to the at least two TRPs.

38. The method according to supplement 37, wherein the field of the DCI signaling is a TDRA field.

39. The method according to supplement 36, wherein the DCI signaling related to the uplink data is DCI signaling scheduling the uplink data.

40. The method according to supplement 36, wherein, the DCI signaling related to the uplink data is DCI signaling used for activating the configured grant corresponding to the uplink data, and the uplink data correspond to the type 2 configured grant.

41. The method according to supplement 27, wherein transmission of the uplink data is initial transmission of the uplink data.

42. The method according to supplement 27, wherein transmission of the uplink data is retransmission of the uplink data.

43. The method according to supplement 27, wherein,

N4 symbols after a first transmission occasion of the uplink data are not used for transmitting the uplink data; the first transmission occasion is a last transmission occasion of a second transmission occasion of the uplink data in the time domain; and a TRP related to the first transmission occasion is different from a TRP related to the second transmission occasion.

44. The method according to supplement 43, wherein the number of N4 is one of the following: 1,2,3,4.

45. The method according to supplement 43, wherein the N4 is indicated by RRC signaling.

46. The method according to supplement 45, wherein the RRC signaling is related to a subcarrier spacing (SCS).

47. The method according to any one of supplements 27-46, wherein the TRP is equivalent to at least one of the following:

a transmission configuration indication state; a spatial relation; a reference signal; a reference signal group; an SRS resource group; a spatial domain filter; a power control parameter; and a group of time alignment (TA) related parameters.

48. A method for indicating uplink data transmission, wherein the method includes: transmitting indication information by a network device to a terminal equipment, the indication information indicating that at least one transmission occasion of the uplink data is related to at least two TRPs.

49. The method according to supplement 48, wherein the uplink data are transmitted in a manner of PUSCH repetition type B, and the at least one transmission occasion of the uplink data being related to at least two TRPs refers to that, transmission occasions of former N1 nominal repetitions of the uplink data are related to a first TRP in the at least two TRPs, and transmission occasions of next N1 nominal repetitions of the uplink data are related to a second TRP in the at least two TRPs.

50. The method according to supplement 49, wherein remaining transmission occasions of the uplink data are respectively related to the first TRP and the second TRP in units of transmission occasions of N1 nominal repetitions.

51. The method according to supplement 49, wherein the number of N1 is one of the following: 1,2,4,8.

52. The method according to supplement 48, wherein the uplink data are transmitted in a manner of PUSCH repetition type B, and the at least one transmission occasion of the uplink data being related to at least two TRPs refers to that, transmission occasions of former N2 actual repetitions of the uplink data are related to a first TRP in the at least two TRPs, and transmission occasions of next N2 actual repetitions of the uplink data are related to a second TRP in the at least two TRPs.

53. The method according to supplement 52, wherein remaining transmission occasions of the uplink data are related respectively to the first TRP and the second TRP in units of transmission occasions of N2 actual repetitions.

54. The method according to supplement 52, wherein the number of N2 is one of the following: 1,2,4,8.

55. The method according to supplement 48, wherein the uplink data are transmitted in a manner of PUSCH repetition type B, and the at least one transmission occasion of the uplink data being related to at least two TRPs refers to that, transmission occasions in former N3 slots of the uplink data are related to a first TRP in the at least two TRPs, and transmission occasions in next N3 slots of the uplink data are related to a second TRP in the at least two TRPs.

56. The method according to supplement 55, wherein remaining transmission occasions of the uplink data are related respectively to the first TRP and the second TRP in units of transmission occasions in N3 slots.

57. The method according to supplement 55, wherein the number of N3 is one of the following: 1,2,4,8.

58. The method according to supplement 48, wherein the uplink data are transmitted in a manner of PUSCH repetition type A, and the at least one transmission occasion of the uplink data being related to at least two TRPs refers to that, transmission occasions of the uplink data in former M1 slots are related to a first TRP in the at least two TRPs, and transmission occasions of the uplink data in next M1 slots are related to a second TRP in the at least two TRPs.

59. The method according to supplement 58, wherein remaining transmission occasions of the uplink data are respectively related to the first TRP and the second TRP in units of transmission occasions in M1 slots.

60. The method according to supplement 58, wherein the number of M1 is one of the following: 1,2,4,8.

61. The method according to supplement 48, wherein the uplink data are transmitted in a manner of PUSCH repetition type A, and the at least one transmission occasion of the uplink data being related to at least two TRPs refers to that,

in a slot associated with the uplink data, a first transmission occasion of the uplink data is related to a first TRP in the at least two TRPs in a first time domain part, and the first transmission occasion is related to a second TRP in the at least two TRPs in a next time domain part.

62. The method according to supplement 48, wherein the indication information is RRC signaling.

63. The method according to supplement 62, wherein,

the RRC signaling is further used to indicate a first DCI format, the first DCI format being identical to the DCI format scheduling the uplink data.

64. The method according to supplement 62, wherein,

the RRC signaling is further used to indicate a second DCI format, the second DCI format being identical to the configured grant activation DCI format corresponding to the uplink data, and the uplink data correspond to a type 2 configured grant.

65. The method according to supplement 48, wherein the indication information is DCI signaling related to the uplink data.

66. The method according to supplement 65, wherein the indication information indicates via a field of the DCI signaling that the at least one transmission occasion is related to the at least two TRPs.

67. The method according to supplement 66, wherein the field of the DCI signaling is a TDRA field.

68. The method according to supplement 65, wherein the DCI signaling related to the uplink data is the DCI signaling scheduling the uplink data.

69. The method according to supplement 65, wherein,

the DCI signaling related to the uplink data is DCI signaling used for activating the configured grant corresponding to the uplink data, and the uplink data correspond to a type 2 configured grant.

70. The method according to any one of supplements 48-69, wherein the TRP is equivalent to at least one of the following:

a transmission configuration indication state;
a spatial relation;
a reference signal;

a reference signal group;
an SRS resource group;
a spatial domain filter;
a power control parameter; and
a group of time alignment (TA) related parameters.

71. A terminal equipment, including a memory and a processor, the memory storing a computer program, and the processor being configured to execute the computer program to carry out the method as described in any one of supplements 1-47.

72. A network device, including a memory and a processor, the memory storing a computer program, and the processor being configured to execute the computer program to carry out the method as described in any one of supplements 48-70.

73. A communication system, including a terminal equipment and a network device, wherein,

the terminal equipment is configured to carry out the method as described in any one of supplements 1-47, and the network device is configured to carry out the method as described in any one of supplements 48-70.

**Claims**

1. An apparatus for transmitting uplink data, wherein the apparatus comprises:
   a transmitting unit configured to transmit uplink data in a manner of PUSCH repetition type B, at least one transmission occasion of the uplink data being related to at least two TRPs.

2. The apparatus according to claim 1, wherein that the at least one transmission occasion of the uplink data being related to at least two TRPs refers to that, transmission occasions of former N1 nominal repetitions of the uplink data are related to a first TRP in the at least two TRPs, and transmission occasions of next N1 nominal repetitions of the uplink data are related to a second TRP in the at least two TRPs.

3. The apparatus according to claim 2, wherein remaining transmission occasions of the uplink data are related respectively to the first TRP and the second TRP in units of transmission occasions of N1 nominal repetitions.

4. The apparatus according to claim 1, wherein that the at least one transmission occasion of the uplink data being related to at least two TRPs refers to that, transmission occasions of former N2 actual repetitions of the uplink data are related to a first TRP in the at least two TRPs, and transmission occasions of next N2 actual repetitions of the uplink data are related to a second TRP in the at least two TRPs.

5. The apparatus according to claim 4, wherein remaining transmission occasions of the uplink data are related respectively to the first TRP and the second TRP in units of transmission occasions of N2 actual repetitions.

6. The apparatus according to claim 1, wherein that the at least one transmission occasion of the uplink data being related to at least two TRPs refers to that, transmission occasions in former N3 slots of the uplink data are related to a first TRP in the at least two TRPs, and transmission occasions in next N3 slots of the uplink data are related to a second TRP in the at least two TRPs.

7. The apparatus according to claim 6, wherein remaining transmission occasions of the uplink data are related respectively to the first TRP and the second TRP in units of transmission occasions in N3 slots.

8. The apparatus according to claim 1, wherein the apparatus further comprises:
   a receiving unit configured to receive indication information, the indication information indicating that at least one transmission occasion of the uplink data is related to at least two TRPs.

9. The apparatus according to claim 8, wherein the indication information is RRC signaling.

10. The apparatus according to claim 9, wherein, the RRC signaling is further used to indicate a first DCI format, the first DCI format being identical to a DCI format scheduling the uplink data.

11. The apparatus according to claim 9, wherein, the RRC signaling is further used to indicate a second DCI format, the second DCI format being identical to a configuration grant activation DCI format corresponding to the uplink data, the uplink data corresponding to a type 2 configuration grant.

12. The apparatus according to claim 1, wherein the TRP is equivalent to at least one of the following:

    a transmission configuration indication state;
    a spatial relation;
    a reference signal;
    a reference signal group;
    an SRS resource group;
    a spatial domain filter;
    a power control parameter; and
    a group of time alignment (TA) related parameters.

13. An apparatus for transmitting uplink data, wherein the apparatus comprises:
    a transmitting unit configured to transmit uplink data in a manner of PUSCH repetition type A, at least one transmission occasion of the uplink data being related to at least two TRPs.

14. The apparatus according to claim 13, wherein that the at least one transmission occasion of the uplink data being related to at least two TRPs refers to that, transmission occasions in former M1 slots of the uplink data are related to a first TRP in the at least two TRPs, and transmission occasions in next M1 slots of the uplink data are related to a second TRP in the at least two TRPs.

15. The apparatus according to claim 14, wherein remaining transmission occasions of the uplink data are related respectively to the first TRP and the second TRP in units of transmission occasions in M1 slots.

16. The apparatus according to claim 13, wherein that the at least one transmission occasion of the uplink data being related to at least two TRPs refers to that, in a slot associated with the uplink data, a first transmission occasion of the uplink data is related to a first TRP in the at least two TRPs in a first time domain portion, and the first transmission occasion is related to a second TRP in the at least two TRPs in a next time domain portion.

17. The apparatus according to claim 13, wherein the apparatus further comprises:
    a receiving unit configured to receive indication information, the indication information indicating that at least one transmission occasion of the uplink data is related to at least two TRPs.

18. The apparatus according to claim 17, wherein the indication information is RRC signaling.

19. The apparatus according to claim 18, wherein, the RRC signaling is further used to indicate a first DCI format, the first DCI format being identical to a DCI format scheduling the uplink data.

20. The apparatus according to claim 13, wherein the TRP is equivalent to at least one of the following:

    a transmission configuration indication state;
    a spatial relation;
    a reference signal;
    a reference signal group;
    an SRS resource group;
    a spatial domain filter;
    a power control parameter; and
    a group of time alignment (TA) related parameters.

slot n       slot n+k       slot n+k+1

PDCCH

Rep#1       Rep#2

$T_{proc,2}$

**PUSCH repetition type A**
PUSCH mapping type A
$K_s = k$
$S = 0$
$L = 10$
$K = 2$

■ DM-RS

▨ PT-RS

▨ Data

## FIG. 1

slot n+k       slot n+k+1

Rep#1       Rep#2

**PUSCH repetition type A**
PUSCH mapping type A
$S = 0$
$L = 10$
$K = 2$

■ DM-RS

▨ PT-RS

▨ Data

## FIG. 2

25

slot n  slot n+k  slot n+k+1

PDCCH

Rep#1 Rep#2 Rep#3 Rep#4 Rep#5

Nominal

$T_{proc,2}$

D F F U U U U U U U U U D F F U U U U U U U U U U

Rep#1 Rep#2 3 4 Rep#5 Rep#6

Actual

**PUSCH repetition type B**
PUSCH mapping type B
$K_s = k$
$S = 2$
$L = 5$
$N = 5$

DM-RS

PT-RS

Data

# FIG. 3

slot n+k  slot n+k+1

Rep#1 Rep#2 Rep#3 Rep#4 Rep#5

Nominal

D F F U U U U U U U U U D F F U U U U U U U U U U

Rep#1 Rep#2 3 4 Rep#5 Rep#6

Actual

**PUSCH repetition type B**
**Configured grant**
PUSCH mapping type = 'typeB'
$S = 2$
$L = 5$
$N = 5$

DM-RS

PT-RS

Data

# FIG. 4

502

the terminal equipment receives indication information, the indication information indicating that at least one transmission occasion of the uplink data is related to at least two TRPs

501

a terminal equipment transmits uplink data in a manner of PUSCH repetition type B, at least one transmission occasion of the uplink data being related to two TRPs

# FIG. 5

slot n          slot n+k              slot n+k+1

PDCCH

Rep#1   Rep#2   Rep#3   Rep#4   Rep#5

Nominal

$T_{proc,2}$

D F F U U U U U U U U U U U D F F U U U U U U U U U U U U

Rep#1   Rep#2   3   4   Rep#5   Rep#6

Actual

PUSCH repetition type B

PUSCH mapping type B
$K_s = k$
$S = 3$
$L = 5$
$N = 5$

DM-RS

PT-RS

Data

| TRP#1 | TRP#2 | #1 | #1 | TRP#2 | TRP#1 | #1-1: Inter-nominal-repetition TRP mapping |
| TRP#1 | TRP#1 | #2 | #2 | TRP#2 | TRP#1 | #1-2: Inter-2-nominal-repetition TRP mapping |
| TRP#1 | TRP#1 | #1 | #1 | TRP#1 | TRP#2 | #1-3: Inter-4-nominal-repetition TRP mapping |
| TRP#1 | TRP#2 | #1 | #2 | TRP#1 | TRP#2 | #2-1: Inter-actual-repetition TRP mapping |
| TRP#1 | TRP#1 | #2 | #2 | TRP#1 | TRP#1 | #2-2: Inter-2-actual-repetition TRP mapping |
| TRP#1 | TRP#1 | #1 | #1 | TRP#2 | TRP#2 | #2-3: Inter-4-actaul-repetition TRP mapping |
| TRP#1 | TRP#1 | #1 | #2 | TRP#2 | TRP#2 | #3-1: Inter-slot TRP mapping |
| TRP#1 | TRP#1 | #1 | #1 | TRP#1 | TRP#1 | #3-2: Inter-2-slot TRP mapping |
| TRP#1 | TRP#2 | #1 | #1 | TRP#2 | TRP#1 | #4: Inter-actual-repetition TRP mapping |

# FIG. 6

slot n+k                    slot n+k+1

**PUSCH repetition type B**

PUSCH mapping type B
$K_s = k$
$S = 3$
$L = 5$
$N = 5$

Nominal

D F F U U U U U U U U U U D F F U U U U U U U U U U U

Rep#1   Rep#2   3   4   Rep#5   Rep#6

Actual

DM-RS

PT-RS

Data

| TRP#1 | TRP#2 | #1 | #1 | TRP#2 | TRP#1 | #1-1: Inter-nominal-repetition TRP mapping |
| TRP#1 | TRP#1 | #2 | #2 | TRP#2 | TRP#1 | #1-2: Inter-2-nominal-repetition TRP mapping |
| TRP#1 | TRP#1 | #1 | #1 | TRP#1 | TRP#2 | #1-3: Inter-4-nominal-repetition TRP mapping |
| TRP#1 | TRP#2 | #1 | #2 | TRP#1 | TRP#2 | #2-1: Inter-actual-repetition TRP mapping |
| TRP#1 | TRP#1 | #2 | #2 | TRP#1 | TRP#1 | #2-2: Inter-2-actual-repetition TRP mapping |
| TRP#1 | TRP#1 | #1 | #1 | TRP#2 | TRP#2 | #2-3: Inter-4-actaul-repetition TRP mapping |
| TRP#1 | TRP#1 | #1 | #2 | TRP#2 | TRP#2 | #3-1: Inter-slot TRP mapping |
| TRP#1 | TRP#1 | #1 | #1 | TRP#1 | TRP#1 | #3-2: Inter-2-slot TRP mapping |
| TRP#1 | TRP#2 | #1 | #1 | TRP#2 | TRP#1 | #4: Inter-actual-repetition TRP mapping |

# FIG. 7

slot n        slot n+k        slot n+k+1

**PUSCH repetition type B**

PUSCH mapping type B
$K_s = k$
$S = 3$
$L = 5$
$N = 5$

Nominal

$T_{proc,2}$

D F F U U U U U U U U U U D F F U U U U U U U U U U

Actual

DM-RS

PT-RS

Data

TRP#1   TRP#2   #1    #1   TRP#2   TRP#1   #1-1: Inter-nominal-repetition TRP mapping

# FIG. 8

slot n+k        slot n+k+1

**PUSCH repetition type B**

PUSCH mapping type B
$K_s = k$
$S = 3$
$L = 5$
$N = 5$

Nominal

D F F U U U U U U U U U U D F F U U U U U U U U U U

DM-RS

PT-RS

Actual    Data

TRP#1   TRP#2   #1    #1   TRP#2   TRP#1   #1-1: Inter-nominal-repetition TRP mapping

# FIG. 9

1002

the terminal equipment receives indication information, the indication information indicating that at least one transmission occasion of the uplink data is related to at least two TRPs

1001

a terminal equipment transmits uplink data in a manner of PUSCH repetition type A, at least one transmission occasion of the uplink data being related to at least two TRPs

# FIG. 10

FIG. 11

slot n+k          slot n+k+1

**PUSCH repetition type A**

PUSCH mapping type A
S = 0
L = 10
K = 2

Rep#1                Rep#2

■ DM-RS

▨ PT-RS

▨ Data

| TRP#1 | TRP#2 | | TRP#1 | TRP#2 | #1: Intra-slot TRP mapping |

| TRP#1 | | TRP#2 | #2: Inter-slot TRP mapping |

| TRP#1 | | TRP#1 | #3: Inter-2-slot TRP mapping |

**FIG. 12**

1301

a network device transmits indication information to a terminal equipment,
the indication information indicating that at least one transmission occasion of
the uplink data is related to at least two TRPs

**FIG. 13**

~1400

apparatus for transmitting uplink data

Receiving unit ~1402

Transmitting unit ~1401

**FIG. 14**

~1500

apparatus for transmitting uplink data

Receiving unit ~1502

Transmitting unit ~1501

**FIG. 15**

~1600

apparatus for indicating uplink data transmission

Transmitting unit ~1601

**FIG. 16**

1700

1701

1702

# FIG. 17

1800

1801    1803

**Terminal equipment**

1804 — | Input unit |

| communication module (transmitter/receiver) |

**Memory**

| buffer |

1802 — | Applicaitoin/function |

| data |

| program |

| processor |

| display | — 1805

| Power supply | — 1806

# FIG. 18

1900

Network device

1902

1904

memory

1901

program

processor

1903

transceiver

## FIG. 19

## INTERNATIONAL SEARCH REPORT

| International application No. |
| --- |
| **PCT/CN2020/107563** |

**A.    CLASSIFICATION OF SUBJECT MATTER**

H04L 5/00(2006.01)i

According to International Patent Classification (IPC) or to both national classification and IPC

**B.    FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNKI, CNPAT, WPI, EPODOC, 3GPP: 物理上行共享信道, 重复, 上行, 收发节点, 名义重复, 实际重复, 时隙, 映射, 相关, 指示, 传输配置指示状态, 参考信号, 功率, 时间对齐, PUSCH, repetition, uplink, TRP, nominal, actual, slot, map, RRC, DCI, TCI, SRS, TA, power, TA

**C.    DOCUMENTS CONSIDERED TO BE RELEVANT**

| Category* | Citation of document, with indication, where appropriate, of the relevant passages | Relevant to claim No. |
| --- | --- | --- |
| X | CN 111277391 A (ZHANXUN SEMICONDUCTOR (NANJING) CO., LTD.) 12 June 2020 (2020-06-12)<br>claims 1-26, description page 11 | 1-20 |
| X | CN 111246582 A (ZHANXUN SEMICONDUCTOR (NANJING) CO., LTD.) 05 June 2020 (2020-06-05)<br>claims 1-24 | 1-20 |
| A | CN 111278120 A (VIVO COMMUNICATION TECHNOLOGY CO., LTD.) 12 June 2020 (2020-06-12)<br>entire document | 1-20 |
| A | WO 2020044409 A1 (NTT DOCOMO, INC.) 05 March 2020 (2020-03-05)<br>entire document | 1-20 |
| A | VIVO. "Discussion on remaining issues on multi TRP transmission"<br>*3GPP TSG RAN WG1 #98bis R1-1910229*, 20 October 2019 (2019-10-20),<br>entire document | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 April 2021** | **25 April 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/107563**

| Patent document cited in search report | | | Publication date (day/month/year) | Patent family member(s) | | | Publication date (day/month/year) |
|---|---|---|---|---|---|---|---|
| CN | 111277391 | A | 12 June 2020 | None | | | |
| CN | 111246582 | A | 05 June 2020 | None | | | |
| CN | 111278120 | A | 12 June 2020 | WO | 2020143526 | A1 | 16 July 2020 |
| WO | 2020044409 | A1 | 05 March 2020 | None | | | |

Form PCT/ISA/210 (patent family annex) (January 2015)